# EUROPEAN PATENT SPECIFICATION

(11) **EP 1 330 101 B1**
(45) Date of publication and mention of the grant of the patent: **16.04.2008**
(21) Application number: 01970197.8
(22) Date of filing: 25.09.2001
(51) Int. Cl.: H04M 11/08, G06F 15/02

(54) **MOBILE TERMINAL DEVICE**
MOBILES ENDGERÄT
DISPOSITIF TERMINAL MOBILE

(30) Priority: 25.09.2000 JP 2000291182; 25.09.2000 JP 2000291183; 25.09.2000 JP 2000291184
(43) Date of publication of application: 23.07.2003
(73) Proprietor: YAMAHA CORPORATION, Naka-ku Hamamatsu-shi Shizuoka-ken (JP)
(72) Inventor: KAWASHIMA, Takahiro, c/o YAMAHA CORPORATION, Hamamatsu-shi, Shizuoka 430-8650 (JP)
(74) Representative: Geyer, Ulrich F.
(86) International application number: PCT/JP2001/008289
(87) International publication number: WO 2002/025902

(56) References cited:
- EP-A- 1 033 857
- EP-A2- 0 256 835
- WO-A-97/20274
- GB-A- 2 333 209
- JP-A- 6 131 403
- JP-A- 6 284 194
- JP-A- 9 065 434
- JP-A- 9 116 603
- JP-A- 10 105 563
- JP-A- 10 260 960
- JP-A- 11 155 176
- JP-A- 11 187 087
- JP-A- 11 259 514
- JP-A- 11 298 656
- JP-A- 2000 032 097
- JP-A- 2000 099 474
- JP-A- 2000 115 303
- JP-A- 2000 228 704
- JP-A- 2000 350 244
- JP-U- 5 043 644
- US-A- 5 534 888

## Description

### Technical Field

This invention relates to portable terminal devices such as portable telephones and personal handyphone systems (PHS), which provide users or subscribers with visual and audio representations in particular with regard to specific contents of information, amusement, entertainment and advertisement, for example.

### Background Art

Conventionally, various types of devices and systems are proposed for distribution and reproduction of visual and audio contents on portable terminal devices such as portable telephones. As contents, the conventional devices and systems have realized so-called portable terminal contents having electronic book functions and portable terminal contents having advertisement functions. One of the conventional contents is directed to distribution of advertisements, which is disclosed in various papers such as Japanese Unexamined Patent Publication No. Hei 9-261169, Japanese Unexamined Patent Publication No. Hei 11-3072, Japanese Unexamined Patent Publication No. Hei 11-88503, and Japanese Unexamined Patent Publication No. Hei 11-338809, for example.

Another example of the conventional contents is directed to distribution and reproduction of games, which is disclosed in various papers such as Japanese Unexamined Patent Publication No. Hei 10-136064 and Japanese Unexamined Patent Publication No. Hei 10-271562, for example.

The aforementioned papers teach that contents for the aim of advertisement or entertainment are composed of combinations of graphic data, text data, and audio data. However, none of them teaches the following points.
(1) Formats of contents aimed at synchronous reproduction of multiple functions, and hardware and software configurations for reproduction of contents.
(2) Formats for enabling creation of contents having stories that attract user's interests, and hardware and software configurations for reproduction of contents having stories.
(3) Techniques for effectively using hardware elements such as displays, sound generators, and vibrators, which are originally installed in portable terminal devices such as portable telephones, in response to reproduction of contents.

The aforementioned paper of Japanese Unexamined Patent Publication No. Hei 10-136064 teaches utilization of a vibrator for use in incoming call notification in a game mode. However, it does not teach utilization of other hardware elements.

As portable telephones having alarm functions, portable telephones having voice message functions for enabling generation of prescribed messages using vocalized sounds at designated times have been developed, examples of which are disclosed in various papers such as Japanese Unexamined Patent Publication No. Hei 9-233229, Japanese Unexamined Patent Publication No. Hei 11-136397, and Japanese Unexamined Patent Publication No. 2000-32097. Among these portable telephones, there are provided portable telephones for suddenly producing a prescribed message at a designated date and time, and portable telephones that urge users to read messages by generating alarm sound or vibration.

Vocalized sounds produced by voice message functions can be used as alarm sounds, however, they are produced based on pre-recorded vocalized messages, which seem to be uninteresting. Even when vocalized sounds are used as wakeup sounds, users may not feel good when being waked up on vocalized sounds produced by portable telephones.

Some portable telephones can produce various kinds of alarm sounds, which are selected from among preset melodies. In this case, conventional portable telephones allow users to select alarm sounds from "fixed" melodies, which are monotonous. Therefore, there is a strong demand that portable telephones should be improved in alarm functions.

Moreover, other types of portable terminal devices such as portable telephones having electronic dictionary functions have been developed. For example, Japanese Unexamined Patent Publication No. Hei 7-87168 discloses one example of portable terminal devices having electronic dictionary functions, which allow users to retrieve headword, and word meaning information (simply, referred to as word information) representing meanings, descriptions, and translations. This portable terminal device simply displays meanings of retrieved words and produces vocalized sounds corresponding to retrieved words.

In addition, Japanese Unexamined Patent Publication No. Hei 9-305579 discloses a system applicable to a portable terminal device that allows a jump to an electronic dictionary from a linked document.

The aforementioned portable terminal device disclosed in Japanese Unexamined Patent Publication No. Hei 7-87168 simply displays meanings of retrieved words and produces corresponding vocalized sounds. However, this portable terminal device may be uninteresting for users. That is, when users refer to an electronic dictionary, the portable terminal device provides the user with simple display and utterance, which cannot provide the user with an intense impression so that the user will have a difficulty in memorizing retrieved contents of the electronic dictionary. In addition, the aforementioned portable terminal device lacks entertaining elements in referring to the electronic dictionary. In other words, the aforementioned portable terminal device may not motivate the user to be willing to operate the electronic dictionary.

The aforementioned system disclosed in Japanese Unexamined Patent Publication No. Hei 9-305579 simply displays meanings of retrieved words while enabling a jump to an electronic dictionary from a linked document. Similar to the aforementioned portable terminal device, this system is uninteresting for the user in referring to the electronic dictionary.

WO 97/20274 A discloses a personal electronic book system which replaces a standard handheld book with an electronic equivalent. The system is sized and configured to be book size and to open like a book for use. When opened, the user sees two facing page-like touch-sensitive, display screens with black print on white background. Icons represent the electronically stored material, "artwork, audio clips, books, e-mail, faxes, games, magazines, movies, musical compositions, newspapers, photographs, software, video clips, etc.", which are selected by touching the icon. When a book, magazine, newspaper, or the like is selected, its table of contents is displayed and the user can then read page by page or go directly to a particular page by touching the selection listed in the table of contents. Closing the personal electronic book automatically shuts down the device. Touching a page number before closing the personal electronic book inserts a bookmark so that when the personal electronic book is re-opened, the user is returned to the same page. New printed or multimedia material can be downloaded from a remote server, that is, "a bookstore", and old material, books read, etc., can be deleted to make room for the new material. More particularly, the personal electronic book comprises two abutting touch-sensitive display screens mounted on a pair of peripherally framed, book-shaped, rectangular cases, hinged together so as to open and close in the manner of a printed book, electronic processing means, a communication means, an updateable memory storage means, an internal power unit with battery and software means, all configured into a handheld, portable unit. The electronic processing means to control and monitor the operations of the personal electronic book in accordance with user requests and under software control, said means comprising touchscreen controllers and a display controller, a microcomputer system with random access memory (RAM), and the software means comprises a proprietary operating system embedded in a solid-state device, i. e. the BIOS ROM, said software means controlling all the functions of the personal electronic book.

### Disclosure of Invention

It is an object of the present invention to provide a portable terminal device that can improve additional values of contents to be reproduced with additional sounds and pictures. As for portable terminal contents regarding games and electronic books, this invention automatically adds specific sounds and/or pictures to bring a reality in playing games and to bring a reality in reading stories of electronic books. As for portable terminal contents regarding advertisements, this invention automatically adds specific sounds and/or pictures to enhance appeals of products for customers.

It is another object of the invention to provide a portable terminal device that has a unique alarm function for enabling generation of various alarm sounds having rich expressions.

It is a further object of the invention to provide a portable terminal device having an electronic dictionary function that attracts user's interests in referring to an electronic dictionary and that provides a user with entertaining and understandable contents presented in an electronic dictionary.

According to the present invention, a portable terminal device is provided as set forth in claim 1. Preferred embodiments of the present invention may be gathered from the dependent claims.

In the above, contents of the book are reproduced in units of pages respectively so that picture or text, speech or musical tones, and vibration are subjected to synchronous reproduction in a time-series manner. In the case of advertisement contents, it is possible to increase appeals of commodities sold on the market in online shopping. In the case of entertainment contents such as animation, novels, and games having their stories, it is possible to bring out realities in stories that progress during reproduction of contents.

In addition, the portable terminal device is applicable to mobile communication systems containing base stations and control stations, establishing connections with public switched networks. Herein, the portable terminal device acts as a mobile station and provides a wireless communicator for performing wireless communication with other terminal devices by way of a base station. Hence, the portable terminal device uses the wireless communicator to download contents of a book from a prescribed server by way of the base station. In this case, the user is able to update contents to be reproduced on the portable terminal device with the newest contents at any time.

Furthermore, the base station or control station makes determination whether to charge a contents use rate for the user of the portable terminal device in response to a state of reproduction of contents. The base station or control station is capable of adequately making determination whether to charge a contents fee in response to a state of reproduction of contents on the portable terminal device. For example, the base station or control station does not charge a contents fee for only a user's request of distributing a first page (or a front page) of a book, whereas it charges a contents fee upon a user's request of distributing remaining pages of the book.

A portable terminal device comprises a storage for storing alarm data, a display for performing alarm-related display, a sound generator for generating alarm sound, a vibrator, a register for registering sound generation sequence data, display sequence data, and vibrator driving sequence data together with reproduction date data in the storage as alarm data, a timer for measuring time, and a controller. Herein, sound generation sequence data instruct the sound generator to generate prescribed speech or musical tones as the alarm sound; display sequence data instruct the display to display a prescribed picture or text on the screen; and vibrator driving sequence data instruct the vibrator to vibrate at a prescribed timing. In addition, the controller controls the sound generator and display in accordance with sound generation sequence data and display sequence data respectively only when reproduction date data registered in the storage matches a measured time of the timer. Alternatively, the controller controls the vibrator to vibrate in accordance with vibrator driving sequence data only when reproduction date data match a measured time of the timer.

In the above, speech, musical tones, picture and text can be subjected to synchronous reproduction in synchronization with vibration caused by the vibrator. Thus, it is possible to actualize a unique alarm function, which provides a variety of alarm methods as to incoming call notification on a portable terminal device such as a portable telephone.

It is possible to additionally provide a wireless communicator that performs wireless communication with other terminal devices by way of a base station. Thus, the portable terminal device is capable of downloading sound generation sequence data, display sequence data, and vibration driving sequence data from a server connected with a public switched network by means of the wireless communicator. Therefore, it is possible to update alarm data with new one at any time.

Upon receipt of an incoming call from the terminal device by the wireless communicator, the controller selectively controls the sound generator, display, or vibrator in accordance with sound generation sequence data, display sequence data, or vibrator driving sequence data. Thus, it is possible to actualize incoming call notification by using contents that contain speech, musical tune, picture, text, and vibration, which can be used for alarms.

Because of the provision of the wireless communicator, the controller of the portable terminal device is capable of transmitting alarm data, which are registered in the storage thereof, to the terminal device by way of a base station. Alternatively, the portable terminal device receives alarm data transmitted from the terminal device by the wireless communicator, so that received alarm data are registered in the storage. That is, it is possible to distribute alarm data between terminal devices, which are connected together by way of a base station.

In addition, the register can selectively register only alarm data, which are transmitted from a specific terminal device, in the storage. This realizes 'message' alarm or simplified telegram on the portable terminal device.

A portable terminal device having an electronic dictionary function comprises a display, a sound generator, an input section; and a controller. The input section provides numeric keys and other keys that are manipulated by a user to make access to a dictionary database containing numerous dictionary items corresponding to pairs of headword and word information. That is, the user is able to retrieve word information from the dictionary database by using a headword as a retrieval key.

Word information contain word data representing meaning of a headword, first utterance data representing reading of the headword, and second utterance data representing sound relevant to the headword. In this case, the controller controls the display to display word data on the screen, whereas the controller also controls the sound generator based on first utterance data and/or second utterance data.

Alternatively, word information contain word data representing meaning of a headword, utterance data representing reading of the headword, and picture data representing picture relevant to the headword. In this case, the controller controls the display to display word data and/or picture data on the screen, whereas the controller also controls the sound generator based on utterance data.

In addition, the portable terminal device also comprises a wireless communicator for performing wireless communication with the other terminal device by way of a base station. That is, the user of the portable terminal device is capable of downloading contents of a dictionary database from a sever connected with a public switched network by means of the wireless communicator. Alternatively, the user is capable of referring to the dictionary database stored in the server online. Herein, the user operates the portable terminal device to transmit the headword; then, the portable terminal device receives retrieval results from the server. Furthermore, the portable terminal device drives the sound generator to generate a prescribed incoming call melody when receiving an incoming call from a terminal device by the wireless communicator.

Furthermore, the portable terminal device also comprises a vibrator for causing vibration. The controller drives the vibrator to cause vibration based on second utterance data representing sound (e.g., engine sound) relevant to the headword. The portable terminal device drives the vibrator to cause vibration when receiving an incoming call from a terminal device by the wireless communicator.

Moreover, dictionary items are accompanied with link addresses that allow a jump from a linked document, which designates a dictionary database as a link destination, to a desired dictionary item.

### Brief Description of Drawings

FIG. 1 is a block diagram showing an electric configuration of a mobile communication system using portable terminal devices as mobile stations in accordance with the present invention;
FIG. 2 is a block diagram showing an internal configuration of a portable telephone corresponding to a portable terminal device in accordance with the present invention;
FIG. 3 shows an example of arrangement of keys on an input section of a body of the portable telephone shown in FIG. 2;
FIG. 4 shows the format for contents to be reproduced in the portable telephone;
FIG. 5 is a simplified time chart showing a relationship between event data and timing data within sequence data constructing contents;
FIG. 6 is a flowchart showing an incoming call notification setup process executed by a CPU of the portable telephone shown in FIG. 2;
FIG. 7 is a flowchart showing an incoming call process executed by the CPU of the portable telephone shown in FIG. 2;
FIG. 8 is a flowchart showing a contents reproduction process executed by the CPU of the portable telephone shown in FIG. 2;
FIG. 9 is a flowchart showing a calling process executed by the CPU of the portable telephone shown in FIG. 2;
FIG. 10 is a block diagram showing an electric configuration of a portable telephone;
FIG. 11 is a flowchart showing an incoming call process executed by a CPU of the portable telephone shown in FIG. 10;
FIG. 12 is a flowchart showing a calling process executed by the CPU of the portable telephone shown in FIG. 10;
FIG. 13 is a flowchart showing an alarm data registration process of the portable telephone shown in FIG. 10;
FIG. 14 is a flowchart showing an alarm generation process of the portable telephone shown in FIG. 10;
FIG. 15 shows an example of alarm data that are created and registered in a RAM of the portable telephone shown in FIG. 10;
FIG. 16 is a block diagram showing an electric configuration of a portable telephone;
FIG. 17 shows a format for use in a dictionary database, which is used by the portable telephone shown in FIG. 16;
FIG. 18 shows an example of a list that constructs a part of the dictionary database; and
FIG. 19 is a flowchart showing a calling process executed by a CPU of the portable telephone shown in FIG. 16.

### Best Mode for Carrying Out the Invention

This invention will be described in further detail by way of examples with reference to the accompanying drawings.

### [A] First Embodiment

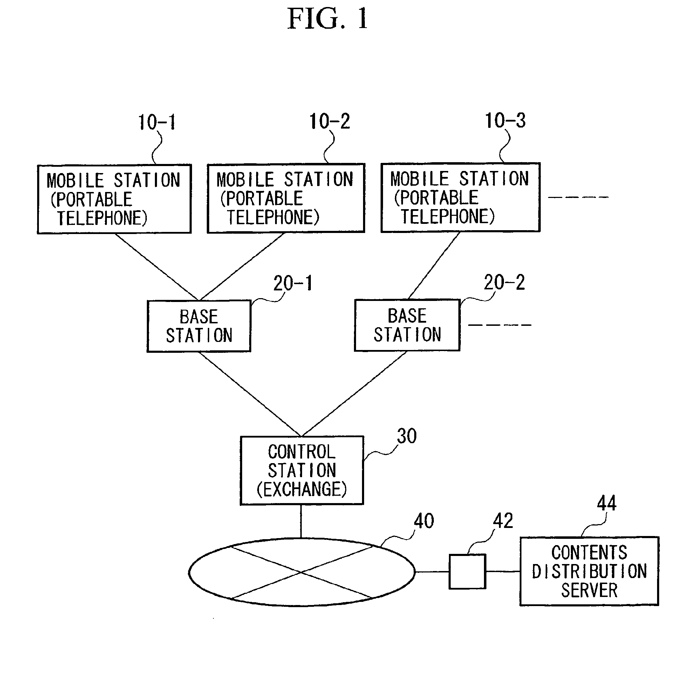

FIG. 1 shows a mobile communication system that is connected with portable terminal devices in accordance with this invention. The mobile communication system of FIG. 1 is composed of mobile stations (10-1, 10-2, 10-3,...), base stations (20-1, 20-2, ...), and a control station 30. Herein, the mobile stations correspond to portable terminal devices in accordance with the first embodiment of this invention. The base stations are located in respective areas, which are determined in advance. The control station 30 pivotally controls the base stations 20-1, 20-2, ... respectively. In addition, the control station 30 is connected with a public switched network 40 by way of gate exchanges (not shown). Furthermore, the public switched network 40 is connected with a contents distribution server 44, which is a provider of specific contents, by way of an access point 42. Incidentally, data communications are performed between the mobile stations and the base stations by radio or by wireless communications.

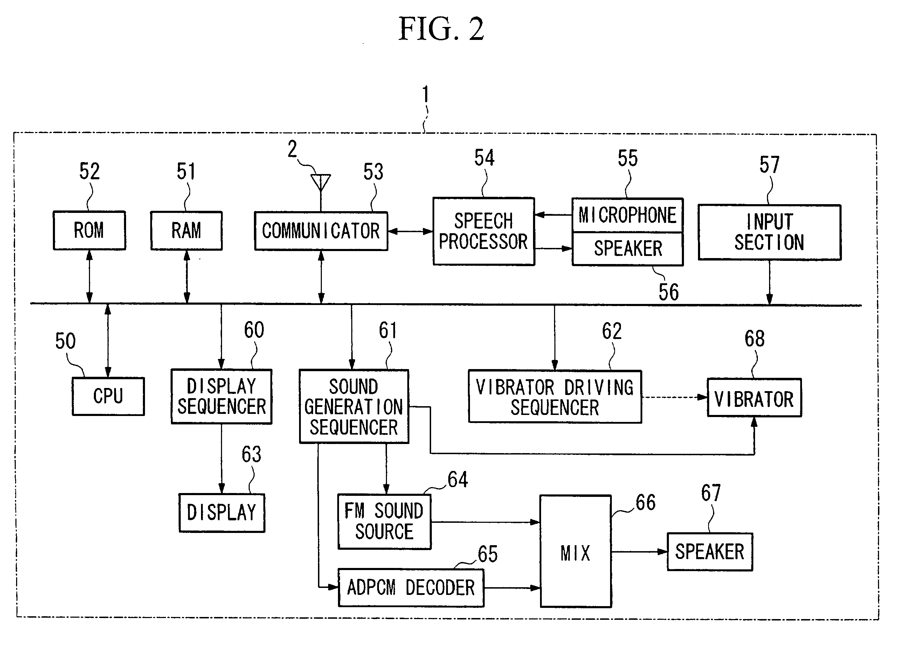

FIG. 2 shows an internal configuration of a portable telephone, which corresponds to the aforementioned portable terminal device (or mobile station) in accordance with the first embodiment of the present invention. That is, a portable telephone 1 comprises a CPU 50, a RAM 51, a ROM 52, a communicator 53, a speech processor 54, a microphone 55, a speaker 56 for use in reproduction of speech signals, and an input section 57. The CPU 50 functions as a system control that controls the overall operation of the portable telephone 1 by executing telephone function programs. In addition, the CPU 50 also functions as a controller that performs various controls for use in reproduction of contents stored in the RAM 51 or ROM 52.

The RAM 51 comprises a data storage area for storing various data constructing contents, which are downloaded from the contents distribution server 44, and a user setup data storage area as well as a work area used by the CPU 50.

The ROM 52 stores various types of control programs executed by the CPU 50, preset data representing various contents, preset control data for use in notification of incoming calls, and other fixed data.

The communicator 53 demodulates signals received by an antenna 2. In addition, it also modulates transmission signals, which are transmitted via the antenna 2. Received speech signals are demodulated by the communicator 53 and are then supplied to the speech processor 54. The speech processor 54 decodes the 'demodulated' received speech signals, based on which the speaker 56 produces the corresponding sound. The microphone 55 picks up user's speech to generate transmitting speech signals, which are subjected to compressive coding by the speech processor 54 and are then supplied to the communicator 53.

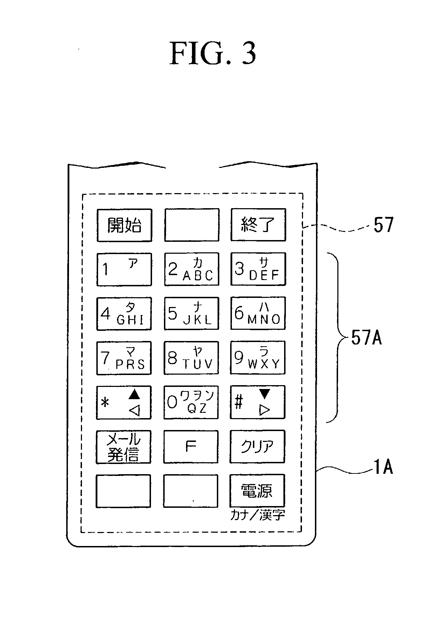

FIG. 3 shows an example of arrangement of keys on the input section 57, which occupies a prescribed surface area of a body 1A of the portable telephone 1. That is, the input section 57 comprises a start key (or a conversation key) that is used to receive a telephone call on the portable telephone 1, an end key that is used to end a telephone conversation on the portable telephone 1, numeric keys that show numbers as well as prescribed characters, and a function key (F) that is used to set prescribed functions. In addition, a power key is used to designate on/off controls of power, and it is also used to control operations of a numeric key unit 57A, which consists of numeric keys (representing numbers of '0' to '9') and other code keys representing specific codes such as '#' and '*'. Furthermore, there is also arranged a clear key for clearing setups of the portable telephone 1.

In FIG. 2, the portable telephone 1 also contains a display sequencer 60, a sound generation sequencer 61, a vibrator driving sequencer 62, a display 63, an FM sound source 64, an ADPCM decoder 65, a mixer (MIX) 66, a speaker 67 for use in reproduction of incoming calls, and a vibrator 68. The display sequencer 60 receives display data that instruct the display 63 to display prescribed pictures or texts on the screen at prescribed timings. Thus, the display sequencer 60 controls the display 63 in response to display data. The sound generation sequencer 61 receives sound generation data that instruct a sound system (e.g., speaker 67) to generate prescribed sounds or musical tones at prescribed timings. That is, the sound generation sequencer 61 controls the FM sound source 64 and the ADPCM decoder 65 in response to sound generation data, wherein 'FM' stands for frequency modulation while 'ADPCM' stands for adaptive differential pulse-code modulation.

The vibrator driving sequencer 62 generates vibrator driving data for instructing the vibrator 68 to vibrate at prescribed timings. That is, the vibrator driving sequencer 62 drives the vibrator 68 to vibrate in response to vibrator driving data. Alternatively, it is possible to drive the vibrator 68 under the control of the sound generation sequencer 61 instead of the vibrator driving sequencer 62. In this case, the sound generation sequencer 61 drives the vibrator 68 to vibrate in synchronization with prescribed timings such as key-on timings for designating generation of musical tones to start, for example.

The aforementioned sequencers, namely the display sequencer 60, sound generation sequencer 61 and vibrator driving sequencer 62, can be each actualized in a form of hardware circuitry as shown in FIG. 2, or they can be each realized in a form of software, programs of which are to be executed by the CPU 50.

Under the control of the sound generation sequencer 61, the FM sound source 64 generates musical tone signals, while the ADPCM decoder 65 generates ADPCM data (namely, adaptive-differential-pulse-code-modulated data). The mixer 66 mixes together musical tone signals and ADPCM data to produce mixed data, which are forwarded to the speaker 67.

As described above, the portable telephone 1 of FIG. 2 comprises two types of sound generators, namely the FM sound source 64 and ADPCM decoder 65. Herein, the FM sound source 64 is designed to synthesize musical tone signals in response to musical tone control data of a MIDI format (where 'MIDI' is an abbreviation for 'Musical Instrument Digital Interface'), for example. The ADPCM decoder 65 is designed to sequentially reproduce ADPCM data representing sounds that are picked up by the microphone and are recorded in advance, for example. Of course, the portable telephone 1 does not always need both the sound generators, hence, it is possible to modify the portable telephone 1 to comprise one of the sound generators only.

Instead of using the FM sound source 64, it is possible to use other types of sound sources such as a sound source of a WT (i.e., Wave Table) type, a sound source of a higher harmonics synthesis type, and a sound source of a rectangular waveform synthesis type. Instead of using the ADPCM decoder 65, it is possible to use other types of decoders such as a PCM decoder, CELP decoder, and MP3 decoder, wherein 'PCM' stands for 'pulse-code modulation'; 'CELP' stands for 'code-excited linear predictive (coding)'; and 'MP' stands for 'multilink protocol'.

The display sequencer 60 and the sound generation sequencer 61 (or vibrator driving sequencer 62) are each started in a contents reproduction mode, and they are each started in an incoming call reception mode.

Contents can be pre-installed in the ROM 52 of the portable telephone 1, or they can be downloaded to the RAM 51 of the portable telephone 1 from the contents distribution server 44 by way of the base stations 20-1, 20-2, ..., and the control station 30. Alternatively, contents can be transferred to the portable telephone 1 from a personal computer (not shown) via its interface.

As contents, it is possible to provide two types of information, namely advertisement information and entertainment information. The advertisement information is provided with respect to new products, new releases of music records, and a variety of services, while the entertainment information is provided with respect to story-related media such as animation, novels, and games.

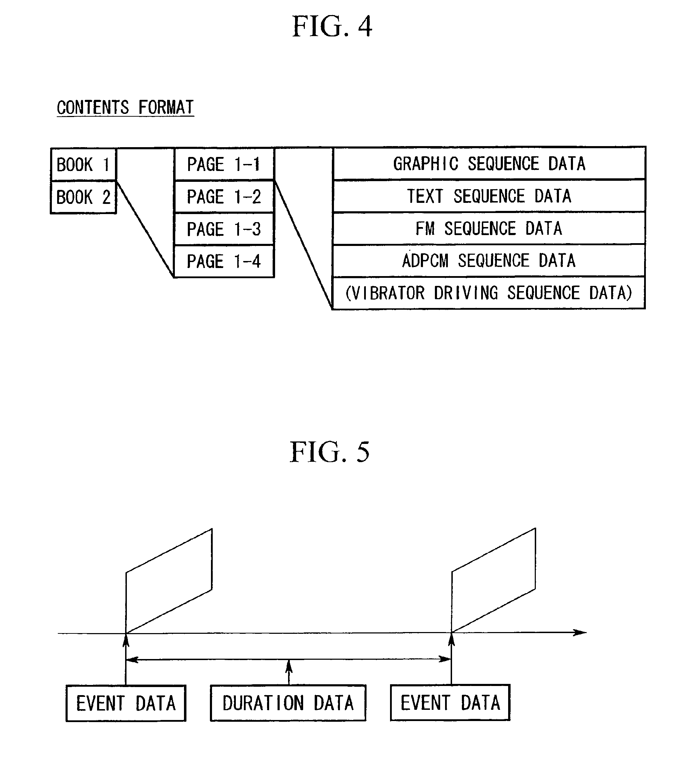

Next, formats for contents that are reproduced in the portable telephone of the present embodiment will be described in detail with reference to Figures 4 and 5. FIG. 4 shows configurations of data regarding contents. The present embodiment presents contents in the form of a book including a single page or plural pages, wherein each page is composed of a collection of various types of sequence data regarding different functions respectively. Therefore, contents of such a book form are provided from an external device (not shown) and are then stored in the RAM 51. Alternatively, contents are pre-installed in the ROM 52. Each set of contents is designated by a book number. For example, 'book 1' consists of pages 1-1 to 1-4, which describe graphic sequence data, text sequence data, FM sequence data, and ADPCM sequence data (and vibrator driving sequence data) respectively.

The aforementioned display data represent graphic sequence data and text sequence data; the aforementioned sound generation data represent FM sequence data and ADPCM sequence data; and the aforementioned vibrator driving data represent vibrator driving sequence data.

It may be possible to use each of the sequence data independently. However, the present embodiment is designed to perform synchronous reproduction for different functions by simultaneously starting reproduction of different sequence data.

Graphic sequence data are composed of graphic data and sequence data for graphics. Graphic data are each designated by a specific graphic number. Sequence data for graphics are composed of event data and duration data, which are shown in FIG. 5. Event data represent a graphic number, display time and display manner, while duration data represent an event (time) interval.

Text sequence data are composed of event data (representing a text character string, reproduction positions, etc.) and duration data.

FM sequence data are composed of tone color data and sequence data for FM. Tone color data are related to an FM synthesis algorithm and are designated by a specific tone color number. Sequence data for FM are composed of event data (representing a tone color number, pitches, note lengths, etc.) and duration data.

ADPCM sequence data are composed of waveform data and sequence data for ADPCM. Waveform data are designated by a specific waveform number. Sequence data for ADPCM are composed of event data (representing a waveform number, sound generation period, etc.) and duration data.

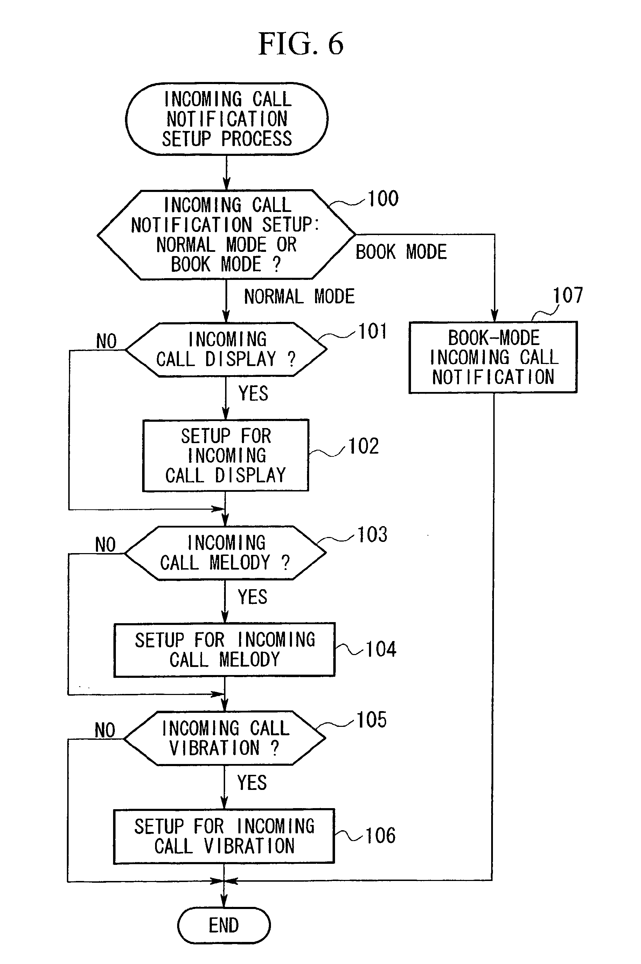

Next, an incoming call notification setup process, which is executed by the CPU 50, will be described with reference to a flowchart shown in FIG. 6. The incoming call notification setup process allows the user to perform detailed setups with regard to various types of incoming call notification. That is, the incoming call notification can be realized by reproduction of contents, display of preset pictures, generation of incoming call melodies, and activation of the vibrator 68 causing vibration of the body of the portable telephone 1. The incoming call notification setup process of FIG. 6 is started when the user of the portable telephone 1 operates a prescribed key of the input section 57 to set an incoming call notification setup mode. First, the flow proceeds to step 100 in which a decision is made as to whether the user designates a normal mode or a book mode in connection with the incoming call notification mode. In the normal mode, the portable telephone 1 proceeds to display of prescribed pictures and text data, generation of incoming call melodies, or vibration of the body caused by the vibrator 68. In the book mode, the portable telephone 1 proceeds to reproduction of contents of a book form that are distributed from the contents distribution server 44 or that are transferred from the external personal computer and the like.

When the CPU 50 determines in step 100 that the portable telephone 1 is set to the normal mode in connection with the incoming call notification mode, it proceeds to steps 101 to 106 so that detailed setups are made with respect to the normal mode. In step 101, a decision is made as to whether or not the user designates an incoming call display process. When the user designates the incoming call display process by operating a prescribed key of the input section 57, the flow proceeds to step 102 in which the user performs detailed setups for the incoming call display process. That is, the user sets prescribed data (namely, display-ON data) on the portable telephone 1 to designate automatic execution of the incoming call display process upon reception of incoming calls. In addition, the user sets a desired picture number for specifying picture data representing pictures to be automatically displayed on the screen of the display 63 upon reception of incoming calls. Furthermore, the user sets a prescribed text number for specifying text data representing a text consisting of characters to be automatically displayed on the screen of the display 63.

When the CPU 50 determines in step 101 that the user does not designate the incoming call display process on the input section 57, or when the CPU 50 detects that user completes all the setups for the incoming call display process in step 102, the flow proceeds to step 103 in which a decision is made as to whether or not the user designates an incoming call melody process. When the user operates a prescribed key of the input section 57 to designate the incoming call melody process, the flow proceeds to step 104 in which the user performs detailed setups for the incoming call melody process. That is, the user sets prescribed data (namely, melody-ON data) on the portable telephone 1 to designate automatic execution of the incoming call melody process, according to which the portable telephone 1 automatically produces a prescribed incoming call melody upon reception of incoming calls. In addition, the user sets a desired melody number for specifying a prescribed incoming call melody to be produced in response to incoming calls.

When the CPU 50 determines in step 103 that the user does not designate the incoming call melody process on the input section 57, or when the CPU 50 detects in step 104 that the user completes all the setups for the incoming call melody process, the flow proceeds to step 105 in which a decision is made as to whether or not the user designates an incoming call vibration process. When the user designates the incoming call vibration process by operating a prescribed key of the input section 57, the flow proceeds to step 106 in which the user makes setup for incoming call vibration. That is, the user sets prescribed data (namely, vibration-ON data) on the portable telephone 1 to designate automatic execution of the incoming call vibration process for activating the vibrator 68 to vibrate the body of the portable telephone 1 upon reception of incoming calls. Thereafter, the CPU 50 ends the incoming call notification setup process of FIG. 6.

When the CPU 50 determines in step 100 that the user designates the book mode in connection with the incoming call notification mode, the flow proceeds to step 107 in which the user makes detailed setup for a book-mode incoming call notification process. Prior to the incoming call notification setup process, various types of contents have been already distributed from the contents distribution server 44 and are stored in the RAM 51 of the portable telephone 1. In step 107, the user designates a desired book number for specifying a prescribed type of contents to be reproduced on the portable telephone 1 upon reception of incoming calls.

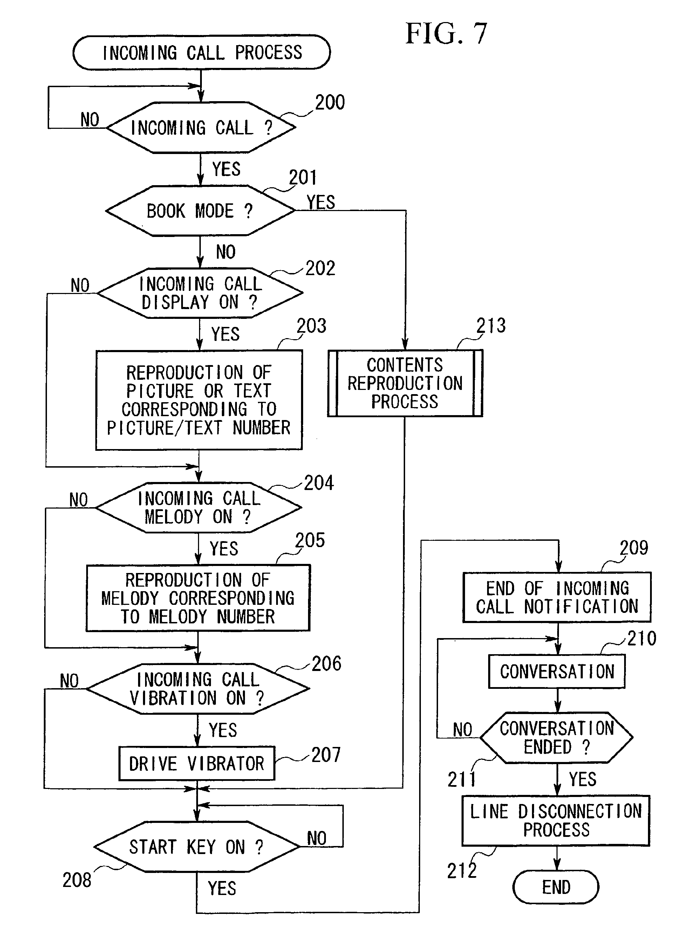

Next, details of an incoming call process to be executed by the CPU 50 of the portable telephone 1 will be described with reference to a flowchart of FIG. 7. Initially, the portable telephone 1 is placed in a standby state for waiting for an incoming call to be transmitted thereto, which is realized by step 200 shown in FIG. 7. Upon reception of an incoming call, the flow proceeds to step 201 in which a decision is made as to whether or not the user designates the book mode in the aforementioned incoming call notification setup process of FIG. 6. When a decision result of step 201 is 'YES', the flow proceeds to step 213 in which the CPU 50 performs a contents reproduction process. Then, the flow proceeds to step 208. Details of the contents reproduction process will be described later. When the CPU 50 determines in step 201 that the user does not designate the book mode in the incoming call notification setup process, the flow proceeds to step 202 in which a decision is made as to whether or not the foregoing display-ON data is set to designate the incoming call display process.

When the CPU 50 determines in step 202 that the display-ON data is set on the portable telephone 1, the CPU 50 automatically performs the incoming call display process with reference to the user setup data storage area of the RAM 51 that stores the picture number and text number in advance. That is, the CPU 50 reads the picture data of the picture number and/or text data of the text number from the RAM 51, so that the read data are sent to the display sequencer 60. Thus, the display sequencer 60 instructs the display 63 to display pictures of picture data and/or characters of text data on the screen at prescribed timings. As a result, the CPU 50 reproduces picture data and/or text data in a time-series manner on the screen of the display 63 in step 203.

In step 204, a decision is made as to whether or not the foregoing melody-ON data is set to designate the incoming call melody process. When the CPU 50 determines in step 204 that the melody-ON data is set on the cellular phone 1, the CPU 50 automatically performs the incoming call melody process with reference to the user setup data storage area of the RAM 51 that stores the melody number in advance. That is, the CPU 50 reads musical tone data representing a incoming call melody designated by the melody number from the RAM 51, so that the sound generation sequencer 61 drives the FM sound source 64 based on musical tone data at a prescribed timing. Thus, the FM sound source 64 produces corresponding musical tone signals, which are sent to the speaker 67 by way of the mixer 66. As a result, the speaker 67 reproduces musical tone data of an incoming call melody in a time-series manner in step 205.

In step 206, a decision is made as to whether or not the foregoing vibration-ON data is set to designate the incoming call vibration process by which the vibrator 68 is driven to vibrate the body of the portable telephone 1 upon reception of an incoming call. When the CPU 50 determines in step 206 that vibration-ON data is set on the portable telephone 1 to designate automatic execution of an incoming call vibration process, the vibrator driving sequencer 62 generates vibrator driving data, which are sent to the vibrator 68. As a result, the vibrator 68 is driven in response to vibrator driving data, so that the body of the portable telephone 1 is vibrated to notify the user of reception of an incoming call in step 207.

In the normal mode, the portable telephone 1 performs incoming call notification by using at least one of three methods such as an incoming call display process of step 203, an incoming call melody process of step 205, and an incoming call vibration process of step 207.

In step 208, a decision is made as to whether or not the user operates a start key of the input section 57, which is used to answer the phone. When the CPU 50 determines in step 208 that the user operates the start key, the flow proceeds to step 209 in which the CPU 50 ends the incoming call notification process. Thus, the portable telephone 1 proceeds to conversation with a calling party in step 210.

In step 211, a decision is made as to whether or not the user ends the conversation over the portable telephone 1. In other words, a decision is made as to whether or not the user operates an end key of the input section 57. When the CPU 50 determines in step 211 that the user operates the end key to end the conversation with the calling party, the flow proceeds to step 212 to perform a line disconnection process, so that line disconnection is performed between the user's portable telephone 1 and a telephone terminal of the calling party. Thereafter, the CPU 50 ends the incoming call process of FIG. 7.

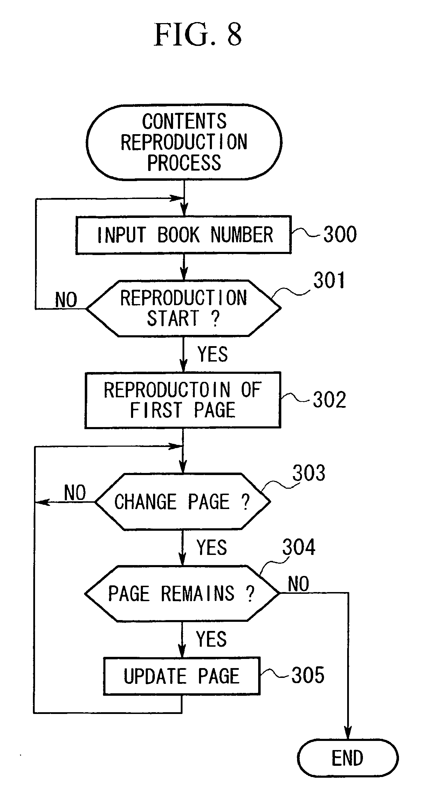

Next, details of the contents reproduction process (see step 213 shown in FIG. 7) will be described with reference to a flowchart of FIG. 8. It may be possible to perform the contents reproduction process in a real time manner simultaneously with distribution of contents from an external device or system. In the present embodiment, however, the contents reproduction process of FIG. 8 is designed under a precondition where distributed contents are temporarily stored in the RAM 51 and are then subjected to reproduction on demand. When the user inputs a book number for specifying contents stored in the RAM 51 in step 300, the flow proceeds to step 301 in which a decision is made as to whether or not the user operates the portable telephone 1 to start reproduction of contents designated by the input book number. When the CPU 50 determines in step 301 that the user operates a prescribed key of the input section 57 to start reproduction of contents, the flow proceeds to step 302. That is, the CPU 50 reads from the RAM 51 data of a first page of a book (or contents) designated by the input book number, so that the first page of the book is subjected to reproduction.

In step 303, a decision is made as to whether or not the user operates the input section 57 to issue a page change instruction. The page change instruction designates a book (corresponding to contents) to change from one page to another. When the CPU 50 detects issuance of a page change instruction in step 303, the flow proceeds to step 304 in which a decision is made as to whether or not other pages remain in the book. When a decision result of step 304 is 'YES', the flow proceeds to step 305 in which the present page is changed with the next page. After completion of the step 305, the flow proceeds back to step 303. Thus, the CPU 50 repeats a series of the foregoing steps 303 to 305 again.

Each page of a book may contain display sequence data for instructing the display 63 to display prescribed picture and/or text constructing contents on the screen at a prescribed timing, sound generation sequence data for instructing the sound system to produce prescribed speech and/or musical tones at a prescribed timing, and vibrator driving sequence data for driving the vibrator 68 to vibrate at a prescribed timing. The CPU 50 reads these sequence data in a time-series manner in units of pages, so that the read sequence data are subjected to synchronous reproduction.

When the CPU 50 determines in step 304 that no page remains in the book, it immediately ends the contents reproduction process.

Incidentally, the foregoing step 303 is described in such a manner that the user operates the input section 57 to change pages of a book. However, this invention is not necessarily limited to the present embodiment that employs such a 'manual' page change process. Hence, it is possible to modify the present embodiment such that the portable telephone 1 automatically changes pages of a book upon an elapse of a prescribed time with respect to prescribed contents, for example. In this case, the contents reproduction process is modified such that an automatic page change process is executed in response to an elapsed time.

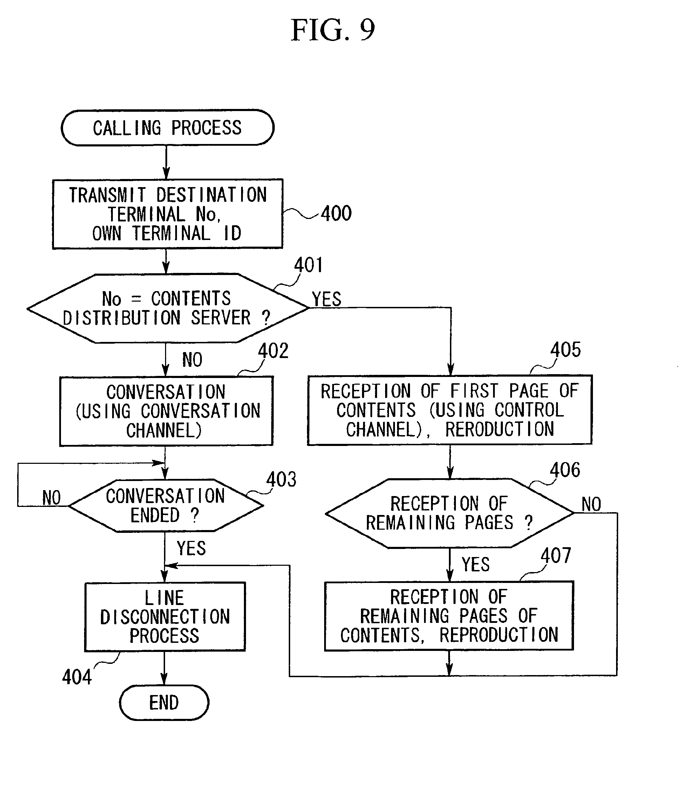

Next, details of a calling process executed by the CPU 50 will be described with reference to a flowchart of FIG. 9. In a call mode, the portable telephone 1 transmits ID data thereof and an identification number of a terminal device corresponding to a communication destination. In step 401, a decision is made as to whether or not the transmitted identification number of the terminal device of the communication destination matches an identification number of the contents distribution server 44. In other words, a decision is made as to whether or not the terminal device of the communication destination matches the contents distribution server 44.

When the CPU 50 determines in step 401 that the terminal device of the communication destination does not match the contents distribution server 44, the flow proceeds to step 402 in which the portable telephone 1 proceeds to conversation over a specific conversation channel. In step 403, a decision is made as to whether or not conversation is ended. In other words, a decision is made as to whether or not the user operates an end key of the input section 57 of the portable telephone 1. When the CPU 50 determines in step 403 that the user operates the end key, the flow proceeds to step 404 in which a line disconnection process is performed. Thereafter, the CPU 50 ends the calling process of FIG. 9.

When the CPU 50 determines in step 401 that the terminal device of the communication destination matches the contents distribution server 44, the flow proceeds to step 405 in which the portable telephone 1 receives various data of a first page of a designated book (or contents) from the contents distribution server 44 over a control channel. Specifically, the portable telephone I receives display sequence data such as graphic sequence data and text sequence data, sound generation sequence data such as FM sequence data and ADPCM sequence data, and vibrator driving sequence data, which are shown in FIG. 4. Then, the portable telephone 1 reproduces the received contents.

In step 406, a decision is made as to whether or not the user operates the portable telephone 1 to receive data of remaining pages of the book. When the user operates a prescribed key of the input section 57 to issue an instruction for receiving data of remaining pages, the CPU 50 detects such an instruction to proceed to reception of data of remaining pages with respect to the book (or contents) designated by the input book number. In step 407, the portable telephone 1 receives data of remaining pages of the book designated by the input book number from the contents distribution server 44. The received data are temporarily stored in the RAM 51 and are then subjected to reproduction. After completion of the step 407, the flow proceeds to step 404 in which a line disconnection process is performed. Thereafter, the CPU 50 ends the calling process of FIG. 9.

The aforementioned calling process of FIG. 9 is described under a precondition where contents are stored in the storage device of the contents distribution server 44. Alternatively, it is possible to modify the system in such a manner that the base stations 20-1, 20-2, ... comprises storage devices for storing contents therein. That is, each base station is capable of acting as a provider for providing its own contents in its service area with or without a charge. In this case, the portable telephone 1 is not required to transmit an identification number of a terminal device of a communication destination; hence, it is necessary to modify the foregoing step 400 of the calling process shown in FIG. 9.

Generally, the mobile communication system establishes a control channel between the portable telephone 1 and the base station in advance. Hence, the user is able to instantaneously receive distribution of advertisement contents from the base station by only operating a prescribed key regarding an advertisement request in the input section 57 of the portable telephone 1.

In the case of entertainment contents, the base station (or high-order control station) does not charge a contents fee for only a request of distribution of a first page (or front page) of contents. In this case, however, a telephone service company may collect a communication fee. The base station charges a contents fee when the user of the portable telephone 1 requests distribution of remaining pages of contents. Actually, so-called carriers (or communications authorities) may collect contents fees, which are transferred to contents distributors respectively.

In the case of advertisement contents, the base station (or high-order control station) does not necessarily charge a contents fee for distribution of contents. That is, the base station does not charge a contents fee, regardless of a request of distribution of remaining pages of contents. In this case, contents distributors may bear contents fees and communication fees.

The user of the portable telephone 1 is capable of ordering goods in relation with received advertisement contents. This can be realized by the base station (or high-order control station) that registers an identification number of the portable telephone 1 therewith. That is, the base station sends personal information, such as a name and an address of the user of the portable telephone 1 specified by the registered identification number, to the contents distribution server 44. Thus, the contents distributor deals with delivery of an ordered item to the user at the name and address. Incidentally, the user is capable of ordering an electronic item, i.e., electronic data regarding specific contents. In this case, a contents distributor transmits electronic data to the user of the portable telephone 1 via a connected line. The aforementioned carrier temporarily shoulders a charge of an ordered item; then, the carrier collects the charge from the user who orders the item with reference to the identification number of the portable telephone 1.

Next, technical features and effects of the first embodiment of the present invention will be described below.
(1) According to a portable terminal device of the present embodiment, contents of a book are reproduced in such a manner that pictures (or text), speech (or musical tones), and vibration are subjected to synchronous reproduction in a time-series manner in units of pages respectively. In the case of advertisement contents, it is possible to increase appeals of commodities sold on the market in online shopping. In the case of entertainment contents such as animation, novels, and games having their own stories, it is possible to bring out realities of stories that progress during reproduction of contents.
(2) The portable terminal device of the present embodiment comprises a wireless communicator for performing wireless communication with other terminal devices by way of base stations. Herein, the portable terminal device proceeds to reproduction of a book upon reception of an incoming call from a terminal device with which wireless communication is established via the base station. Therefore, the portable terminal device is capable of performing incoming call notification by reproduction of highly value added contents.
(3) The portable terminal device of the present embodiment comprises a wireless communicator for performing wireless communication with other terminal devices by way of base stations. When receiving an incoming call from a terminal device by means of the wireless communicator, the portable terminal device proceeds to incoming call notification such that a prescribed picture or text is displayed on the screen of the display, a prescribed incoming call melody is generated by the sound generator, or the vibrator is activated to vibrate the body. That is, the user is capable of making desired setups on the portable terminal device in accordance with user's preferences so that incoming call notification is made by displaying a prescribed picture or text, generating a prescribed incoming call melody, or vibrating the body.
(4) The portable terminal device of the present embodiment comprises a wireless communicator for performing wireless communication with other terminal devices by way of base stations, so that contents of a book are downloaded from a server by means of the wireless communicator and are temporarily stored therein. This allows the user to update contents to be reproduced with the newest contents.
(5) The portable terminal device of the present embodiment is applicable to the existing mobile communication system that presents wireless interconnections with a contents distribution server by way of a base station or a control station. Herein, the portable terminal device is capable of receiving distribution of contents to be reproduced from the contents distribution server via a base station. The base station has an ability of making determination whether to charge a contents use rate for the user of the portable terminal device in consideration of a state of reproduction of contents. Therefore, the base station can adequately charge a contents fee in response to a state of reproduction of contents on the portable terminal device.
(6) In the above, the base station determines whether to charge a contents fee for the user of the portable terminal device in response to requests of distribution. For example, the base station does not charge a contents fee for a user's request of distribution of data of a first page (or front page) of a book, whereas the base station charges a contents fee for a user's request of distribution of data of remaining pages of the book.
(7) The determination whether to charge a contents fee for the user of the portable terminal device is not necessarily made by the base station, but it can be made by the control station. That is, the control station determines whether to charge a contents fee for the user of the portable terminal device in response to requests of distribution. For example, the control station does not charge a contents fee for a user's request of distribution of data of a first page (or front page) of a book, whereas the control station charges a contents fee for a user's request of distribution of data of remaining pages of the book.

### [B] Second Example

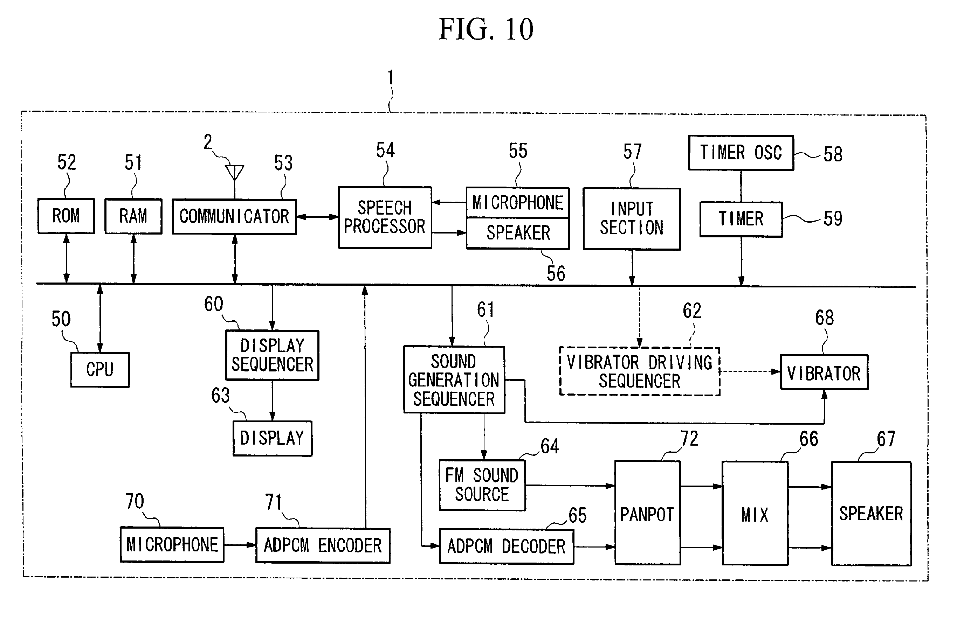

Next, a portable terminal device of a second example of this invention will be described in detail. FIG. 10 shows an electric configuration of a portable telephone corresponding to the portable terminal device of the second example. Similar to the foregoing portable telephone of the first embodiment shown in FIG. 2, the portable telephone of the second example shown in FIG. 10 comprises a CPU 50, a RAM 51, a ROM 52, a communicator 53, a speech processor 54, a microphone 55, a speaker 56 for reproducing received speech signals, and an input section 57, all of which have similar operations of the aforementioned first embodiment. In addition, the portable telephone 1 of FIG. 10 also comprises a timer oscillator (OSC) 58, and a timer 59. The timer oscillator 58 generates clock pulses, which are supplied to the timer 59. Hence, the timer 59 measures time by counting clock pulses generated by the timer oscillator 58.

The portable telephone of the second example further comprises a display sequencer 60, a sound generation sequencer 61, a vibrator driving sequencer 62, a display 63, an FM sound source 64, an ADPCM decoder 65, a mixer (MIX) 66, a speaker 67 for reproducing incoming call signals, and a vibrator 68, all of which have similar operations of the aforementioned first embodiment. In addition, the portable telephone 1 of FIG. 10 comprises a microphone 70 for inputting recording data, an ADPCM encoder 71, and a PANPOT 72 (or panning-potentiometer). The microphone 70 picks up vocalized sounds uttered by the user to produce recording data, which are forwarded to the ADPCM encoder 71. In the ADPCM encoder 71, the recording data are subjected to encoding to produce ADPCM data. The ADPCM data are stored in a prescribed storage area of the RAM 51.

The PANPOT 72 performs panning distribution controls to localize sounds at desired locations in space. Specifically, the PANPOT 72 distributes outputs of the FM sound source 64 and ADPCM decoder 65 between left (L) and right (R) channels in response to a prescribed attenuation ratio. Each of the FM sound source 64 and ADPCM decoder 65 has multiple channels, hence, the PANPOT 72 controls distribution of their outputs with respect to each channel.

The mixer 66 performs mixing between multi-channel outputs of the PANPOT 72. That is, the mixer 66 mixes together outputs of the FM sound source 64 and ADPDM decoder 65 between their channels. Mixing results of the mixer 66 are supplied to the speaker 67.

Both the display sequencer 60 and sound generation sequencer 61 (or the vibrator driving sequencer 62) are activated in a contents reproduction mode, an alarm mode, and an incoming call reception mode. The contents reproduction mode is set when the user operates a prescribed key of the input section 57 to start reproduction of contents on the portable telephone 1.

The portable telephone 1 can store preset contents in the ROM 52 in advance. Alternatively, it is possible to download contents to the RAM S1 of the portable telephone 1 from the contents distribution server 44 by way of the base station 20 or control station 30 (see FIG. 1). Of course, it is possible to download contents from an external personal computer (not shown) via a prescribed interface. As contents, there are provide advertisement contents advertising commodities, new music records, and other services as well as entertainment contents such as animation, novels, and games having stories.

The portable telephone 1 can be designed to provide a music composition function, a voice recording function, and a text creation function, for example.

Similar to the aforementioned first embodiment, the second example is designed to reproduce contents whose format is shown in Figures 4 and 5. That is, contents may correspond to a book consisting of pages, each of which contain graphic sequence data, text sequence data, FM sequence data, ADPCM sequence data, and vibrator driving sequence data. Among these sequence data, the second example may partially modify definitions of sequence data for FM and ADPCM due to the provision of the PANPOT 72. That is, sequence data for FM are composed of duration data and event data, which represent a tone color number, a pitch, a note length, PANPOT, etc. In addition, sequence data for ADPCM are composed of duration data and event data, which represent a waveform number, a sound generation time, PANPOT, etc.

The CPU 50 of the portable telephone I of FIG. 10 performs the foregoing incoming call notification setup process, which has been already described in the first embodiment with reference to the flowchart of FIG. 6.

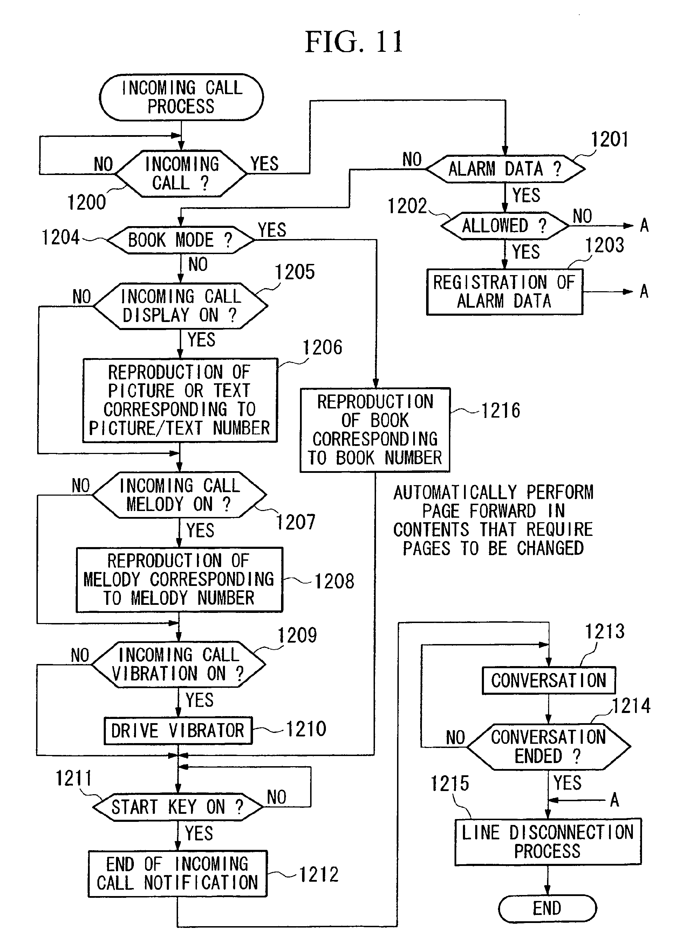

The CPU 50 of the portable telephone 1 of FIG. 10 performs an incoming call process shown in FIG. 11, which is partially modified compared to the aforementioned incoming call process of FIG. 7. Next, a description will be given with respect to the incoming call process of FIG. 11 that is employed in the second example.

The portable telephone I is placed in a standby state for waiting for an incoming call from a calling party, which is realized in step 1200. Upon reception of an incoming call, the flow proceeds to step 1201 in which a decision is made as to whether or not the portable telephone 1 receives alarm data from a terminal device of a calling party. Herein, alarm data are registered with a storage of the terminal device of the calling party and are transmitted to the portable telephone 1 by way of a base station of a mobile communication system. That is, alarm data are composed of sound generation sequence data, display sequence data, vibrator driving sequence data, and reproduction date data. When the CPU 50 determines in step 1201 that the portable telephone 1 have received alarm data from a terminal device of a calling party the flow proceeds to step 1202. In step 1202, a decision is made as to whether or not using of alarm data is allowed. When using of alarm data is not allowed, the flow proceeds to step 121 to perform a line disconnection process. Then, the CPU 50 ends the incoming call process of FIG. 11. When using of alarm data is allowed in step 1202, the flow proceeds to step 1203 in which the alarm data are registered in the RAM 51. Then, the flow proceeds to step 1215 so that a line disconnection process is performed. Thereafter, the CPU 50 ends the incoming call process of FIG. 11.

When the CPU 50 determines in step 1201 that the portable telephone 1 does not receive alarm data from a terminal device of a calling party, the flow proceeds to step 1204 in which a decision is made as to whether or not the portable telephone 1 is set to a book mode, which is set by the aforementioned incoming call notification setup process shown in FIG. 6. When a decision result of step 1204 is 'YES', the flow proceeds to step 1216 in which a contents reproduction process is performed; then, the flow proceeds to step 1211. Details of the contents reproduction process have been already described with reference to FIG. 8. When the CPU 50 determines in step 1204 that the portable telephone 1 is not set to a book mode in connection with an incoming call notification mode, the flow proceeds to step 1205 in which a decision is made as to whether or not the foregoing display-ON data is set to designate automatic execution of an incoming call display process upon reception of incoming calls.

Similar to the aforementioned first embodiment, a desired picture number and/or a desired text number is set in a user setup data storage area of the RAM 51 to designate prescribed picture data and/or prescribed text data. When the CPU 50 determines in step 1205 that display-ON data is set to designate an incoming call display process, the flow proceeds to step 1206 in which the CPU 50 reads picture data of a picture number and/or text data of a text number from the RAM 51, so that the read data are supplied to the display sequencer 60. Hence, the display sequencer 60 instructs the display 63 to display picture data and/or text data on the screen at a prescribed timing. As a result, picture data and/or the text data are subjected to reproduction in a time-series manner on the screen of the display 63.

In step 1207, a decision is made as to whether or not the foregoing melody-ON data is set to designate automatic execution of an incoming call melody process upon reception of incoming calls. Similar to the aforementioned first embodiment, a desired melody number is set in a user setup data storage area of the RAM 51 to designate a prescribed melody. When the CPU 50 determines in step 1207 that melody-ON data is set to designate an incoming call melody process, the flow proceeds to step 1208 in which the CPU 50 reads musical tone data of a melody of a melody number from the RAM 51, so that the read data are supplied to the sound generation sequencer 61. Based on musical tone data, the sound generation sequencer 61 drives the FM sound source 64 at a prescribed timing, so that the FM sound source 64 generates musical tone signals, which are sent to the speaker 67 via the mixer 66. Thus, the speaker 67 reproduces musical tone data of a designated melody in a time-series manner.

In step 1209, a decision is made as to whether or not the foregoing vibration-ON data is set to designate automatic execution of an incoming call vibration process upon reception of incoming calls. When the CPU 50 determines in step 1209 that vibration-ON data is set to designate an incoming call vibration process, the flow proceeds to step 1210 in which a drive signal is supplied to the vibrator 68. As a result, the vibrator 68 is driven to vibrate the body of the portable telephone 1, thus notifying the user of reception of an incoming call.

In the normal mode, the portable telephone 1 performs at least one of three incoming call notification steps, namely, step 1206 for performing an incoming call display process, step 1208 for performing an incoming call melody process, and step 1210 for performing an incoming call vibration process.

In step 1211, a decision is made as to whether or not the user operates a start key of the input section 57, which is used to answer the phone. When the CPU 50 determines in step 1211 that the user operates the start key, the flow proceeds to step 1212 in which the portable telephone 1 ends incoming call notification. Then, the flow proceeds to step 1213 in which the user of the portable telephone 1 performs conversation with a calling party.

In step 1214, a decision is made as to whether or not the user ends conversation with a calling party. In other words, a decision is made as to whether or not the user operates an end key of the input section 57. When a decision result of step 1214 is 'YES', the flow proceeds to step 1215 in which a line disconnection process is performed. Thereafter, the CPU 50 ends the incoming call process of FIG. 11.

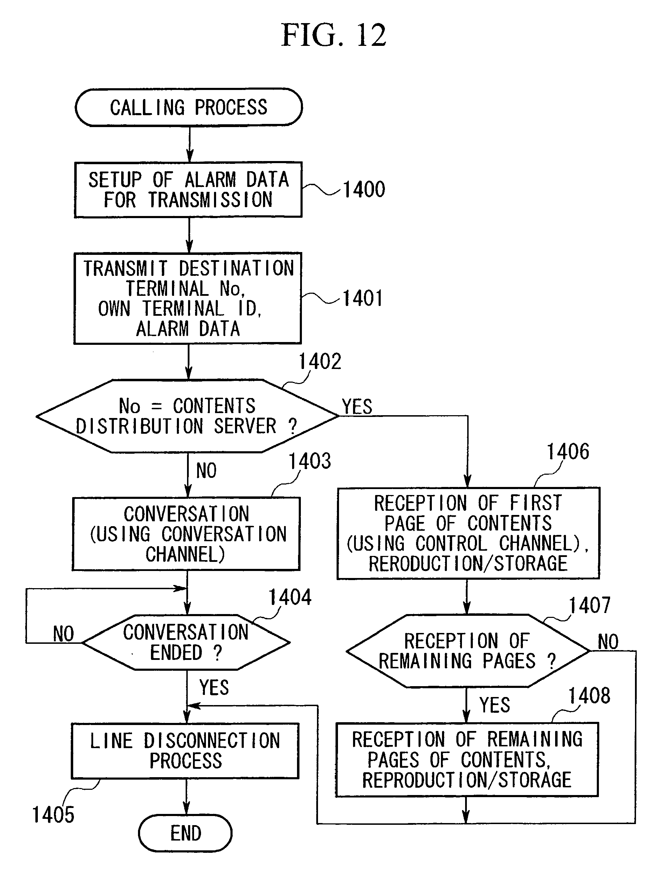

With reference to a flowchart of FIG. 12, a description will be given with respect to a calling process that is executed by the CPU 50 of the portable telephone I shown in FIG. 10. The calling process of FIG. 12 contains distribution of contents allowing multipurpose uses including alarm use from the contents distribution server 44 (see FIG. 1) and transmission of alarm data to a terminal device of a communication destination.

In a call mode, the user sets alarm data that is to be transmitted to a terminal device of a communication destination in step 1400. Then, the user operates the portable telephone 1 to transmit its ID data and alarm data as well as an identification number of the terminal device of the communication destination in step 1401. In step 1402, a decision is made as to whether or not the transmitted identification number of the terminal device of the communication destination designates the contents distribution server 44. In other words, a decision is made as to whether or not the terminal device of the communication destination matches the contents distribution server 44.

When the CPU 50 determines in step 1402 that the terminal device of the communication destination does not match the contents distribution server 44, the flow proceeds to step 1403 in which the user of the portable telephone 1 performs conversation with the terminal device over a specific conversation channel. In step 1404, a decision is made as to whether or not the user ends conversation. In other words, a decision is made as to whether or not the user operates an end key of the input section 57. When the CPU 50 determines in step 1404 that the user operates the end key, the flow proceeds to step 1405 in which a line disconnection process is performed. Thereafter, the CPU 50 ends the calling process of FIG. 12.

When the CPU 50 determines in step 1402 that the terminal device of the communication destination matches the contents distribution server 44, the flow proceeds to step 1406 in which the portable telephone 1 receives various data described on a first page of a designated book from the contents distribution server 44 over a specific control channel. Similar to the aforementioned first embodiment, the book describes display sequence data such as graphic sequence data and text sequence data, sound generation sequence data such as FM sequence data and ADPCM sequence data, and vibrator driving sequence data on each page, which is shown in FIG. 4. The received contents of the book are stored in a prescribed storage area of the RAM 51 and are then subjected to reproduction.

In step 1407, a decision is made as to whether or not the user wishes to receive data of remaining pages of the book. When the user operates a prescribed key of the input section 57 to designate reception of data of remaining pages of the book, the CPU 50 determines that the portable telephone 1 is instructed to receive data of remaining pages of the book designated by the input book number. In this case, the flow proceeds to step 1408 in which the portable telephone 1 receives data of remaining pages of the designated book from the contents distribution server 44. The received data are stored in a prescribed storage area of the RAM 51 and are then subjected to reproduction. After completion of the step 1408, the CPU 50 performs a line disconnection process in step 1405. Thereafter, the CPU 50 ends the calling process of FIG. 12.

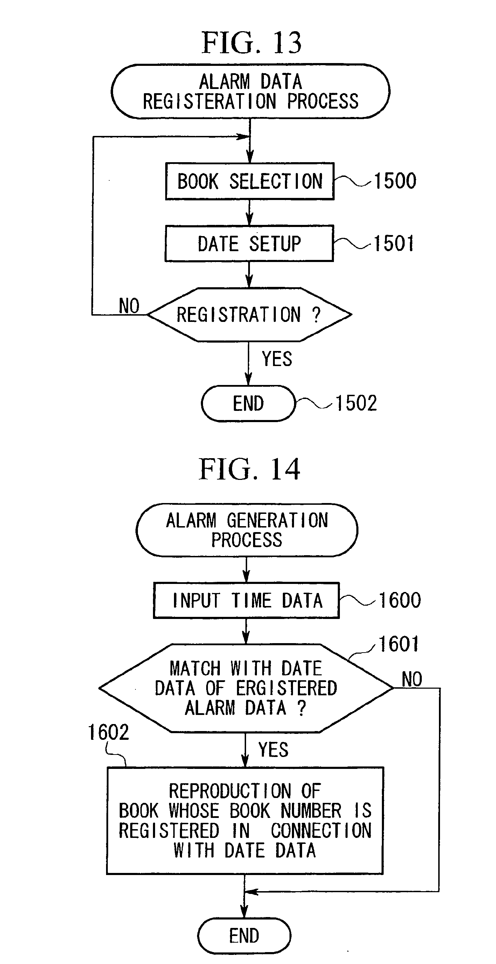

Next, an alarm data registration process will be described with reference to a flowchart of FIG. 13. Before registration of alarm data in the RAM 51, the user operates the input section 57 to select a book for use in registration by designating its book number in step 1500. In step 1501, the user sets a date and time for causing generation of alarm. Through steps 1500 and 1501, alarm data is composed of the book number and date data.

In step 1502, a decision is made as to whether or not alarm data should be registered in the RAM 51. In other words, a decision is made as to whether or not the user operates the input section 57 to instruct registration of alarm data in the RAM 51.

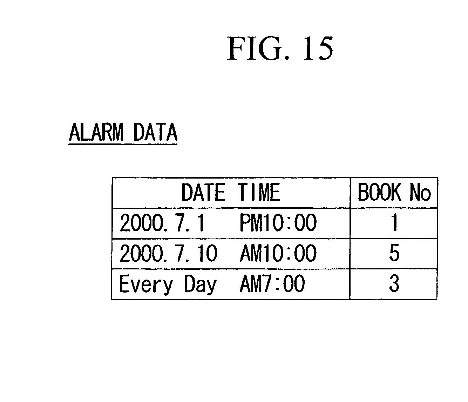

When the CPU 50 determines in step 1502 that the user does not instruct registration of alarm data in the RAM 51, the flow returns to step 1500 again. Thus, a series of steps 1500 to 1502 are repeated. When the CPU 50 determines in step 1502 that the user instructs registration of alarm data in the RAM 51, it ends the alarm data registration process of FIG. 13. FIG. 15 shows an example of alarm data that are registered in the RAM 51 by the alarm data registration process of FIG. 13. As shown in FIG. 15, alarm data are registered in the RAM 51 such that book numbers for specifying books whose contents are to be reproduced are stored in connection with date data for designating dates and times causing reproduction.

Next, an alarm generation process will be described with reference to a flowchart of FIG. 14. In step 1600, the CPU 50 inputs time data that is generated by the timer 59 to represent a measured time. In step 1601, a decision is made as to whether or not time data match date data of registered alarm data. When time data match date data, the flow proceeds to step 1602 in which the CPU 50 selects the corresponding book number registered in the RAM 51, so that the CPU 50 proceeds to reproduction of contents of a book designated by a selected book number.

When a decision result of step 1601 is 'NO', or when the CPU 50 completes reproduction of contents of a book whose book number is registered in the RAM 51 in connection with the aforementioned date data, the CPU 50 ends the alarm generation process of FIG. 14.

As described above, the second example the present invention has a variety of technical features and effects, which will be described below.
(1) A portable terminal device of the present example is capable of downloading sound generation data representing a prescribed speech or a musical tune from an external device or server, wherein sound generation data are registered in a storage as alarm data. In addition, it is possible to store other sound generation data representing composed tune and message, display data representing prescribed picture or text, and vibrator driving data in the storage as other alarm data. By adequately reading alarm data from the storage, prescribed speech or musical tones, prescribed picture or text, or vibrator driving data are subjected to synchronous reproduction at a preset time. That is, it is possible to realize alarm by reproducing speech, musical tones, picture, or text or by activating vibration. Thus, it is possible to provide a unique alarm function on the portable terminal device such as a portable telephone.
(2) The portable terminal device of the present example is capable of downloading sound generation sequence data, display sequence data, and vibrator driving sequence data from a server (namely, a contents distribution server) by means of a wireless communicator, which performs wireless communication with a base station connected with a public switched network. Therefore, it is possible to update alarm data with the new one at any time.
(3) The portable terminal device of the present example is capable of receiving alarm data from a terminal device of a communication destination by means of a wireless communicator, so that the received alarm data are registered in a storage. This allows distribution of alarm data between different portable terminal devices that are connected together in a mobile communication system.
(4) The portable terminal device of the present example is capable of selectively receiving alarm data from a specific terminal device that is designated in advance, so that only the received alarm data from a specific terminal device is registered in the storage. This realizes 'message' alarm automatically activated at a memorial day, and simplified telegram, for example.

### [C] Third Example

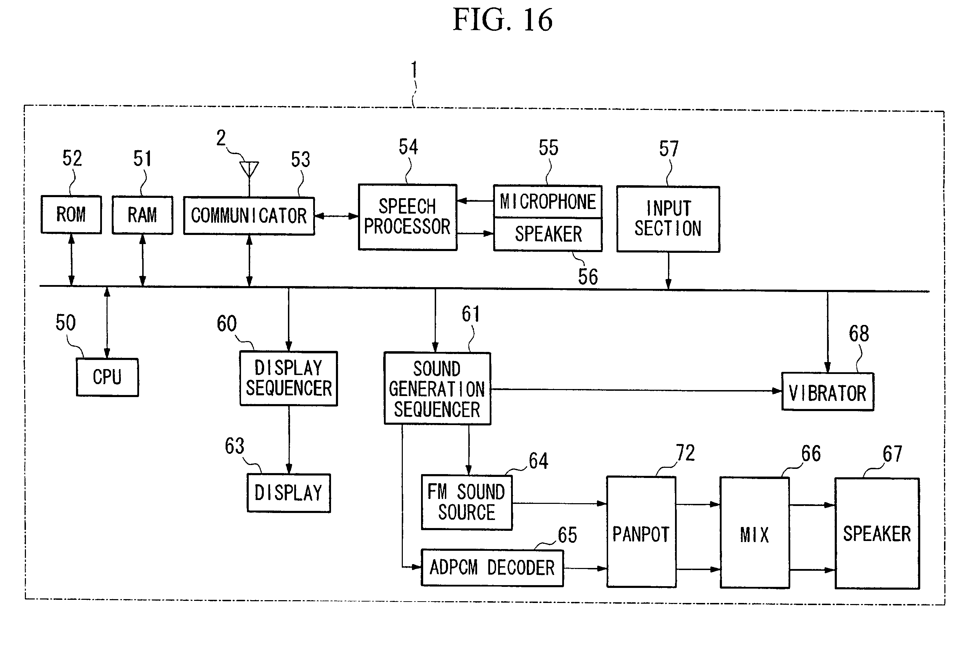

FIG. 16 shows an electric configuration of a portable telephone corresponding to a portable terminal device in accordance with a third example of the present invention. A portable telephone 1 of the third example shown in FIG. 16 is basically constituted similar to the aforementioned portable telephones of the first embodiment and second example shown in Figures 2 and 10. That is, the portable telephone 1 of FIG. 16 contains a CPU 50, a RAM 51, a ROM 52, a communicator 53, a speech processor 54, a microphone 55, a speaker 56 for reproduction of received speech signals, and an input section 57.

The RAM 51 has a storage area for storing various data representing contents downloaded from the contents distribution server 44 (see FIG. 1), a user setup data storage area, and a work area that is used by the CPU 50.

The ROM 52 stores various types of control programs executed by the CPU 50, preset data representing various contents, and other preset data for use in incoming call notification, as well as other fixed data. The third example is characterized by comprising specific contents representing a dictionary database that is composed of dictionary items corresponding to pairs of headword and word information.

In addition, the portable telephone 1 of FIG. 16 comprises a display sequencer 60, a sound generation sequencer 61, a display 63, an FM sound source 64, an ADPCM decoder 65, a mixer (MIX) 66, a speaker 67, a vibrator 68, and a PANPOT 72.

The display sequencer 60 controls the display 63 to display prescribed picture or text on the screen in accordance with display sequence data. The sound generation sequencer 61 controls the FM sound source 64 and ADPCM decoder 65 in accordance with sound generation sequence data so that a sound system produces prescribed speech or musical tones.

The third example is characterized by that the vibrator 68 is directly controlled by the sound generation sequencer 61. That is, the sound generation sequencer 61 directly drives the vibrator 68 to vibrate in synchronization with timings designated by key-on signals included in sound generation sequence data.

The portable telephone 1 provides the user with a user-friendly electronic dictionary function for allowing the user to retrieve specific word information from electronic dictionary data by using headword as a retrieval key. When the user refers to electronic dictionary data by using a retrieval key, the vibrator 68 is automatically driven based on utterance data representing vocalized sounds that are relevant to headword. In addition, the vibrator 68 is also used to realize incoming call vibration for notifying the user of reception of an incoming call from a calling party by generating vibration.

Functions of the display sequencer 60 and sound generation sequencer 61 can be actualized by hardware elements shown in FIG. 16. Alternatively, they can be actualized by software executed by the CPU 50.

The portable telephone 1 comprises the PANPOT 72 to localize sounds at desired locations in space. Herein, the PANPOT 72 controls distribution of outputs of the FM sound source 64 and ADPCM decoder 65 between left (L) channel and right (R) channels in response to a prescribed attenuation ratio. Each of the FM sound source 64 and ADPCM decoder 65 has multiple channels; hence, the PANPOT 72 is capable of controlling distribution with respect to each channel.

The mixer 66 performs mixing between outputs of the aforementioned channels from the PANPOT 72. In addition, the mixer 66 mixes together outputs of the FM sound source 64 and ADPCM decoder 65, so that mixed data are sent to the speaker 67.

The portable telephone 1 of FIG. 16 comprises two types of sound generators, namely, the FM sound source 64 and ADPCM decoder 65. The FM sound source 64 synthesizes musical tones in accordance with musical tone control data of a MIDI format, for example. The ADPCM decoder 65 receives ADPCM data representing speech or sound that is subjected to recording. Hence, the ADPCM decoder 65 sequentially reproduces ADPCM data. In the third example, the ADPCM decoder 65 proceeds to utterance of reading of headword and utterance of vocalized sounds that are relevant to headword. Incidentally, the FM sound source 64 can also proceed to utterance of vocalized sounds relevant to headword. However, the third example is basically designed in such a way that the FM sound source 64 normally bears generation of musical tones corresponding to a prescribed incoming call melody for use in notification of reception of incoming calls.

The display sequencer 60 and sound generation sequencer 61 operate in response to reception of incoming calls. In the third example they are also activated when the user performs retrieval operations to refer to a dictionary database.

Contents of the dictionary database can be preset to the ROM 52 of the portable telephone 1 in advance. Alternatively, they can be downloaded from the contents distribution server 44 by way of a base station and a control station (see FIG. 1). In addition, it is possible to download them from an external personal computer by means of a specific interface (not shown).

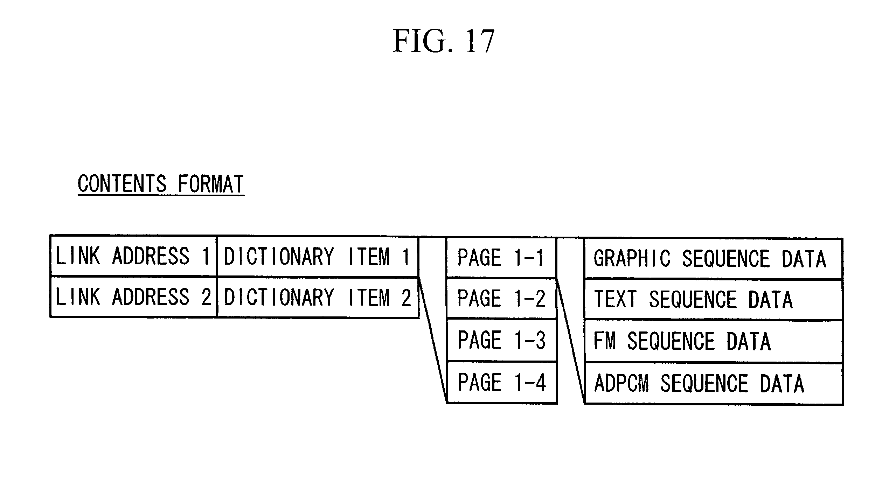

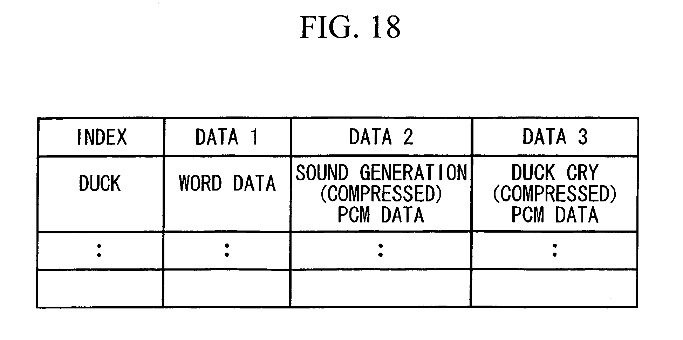

Next, an example of a format for use in a dictionary database, which is referred to in user's electronic dictionary operation on the portable telephone 1, will be described with reference to Figures 17 and 18. As shown in FIG. 18, the dictionary database provides lists in connection with headword (or index), wherein it is composed of dictionary items corresponding to pairs of headword and word information. With respect to each headword (or index), the dictionary database provides a series of three data, namely, data 1, data 2, and data 3 in connection with word information. Data 1 represent word data that show meaning of headword; data 2 represent utterance of reading of headword; and data 3 represent utterance of sounds relevant to headword. Herein, it is possible to modify the dictionary database in such a way that data 3 designate picture relevant to headword.

Setups for data 1, data 2, and data 3 in the aforementioned dictionary database depend upon the type of an application that is actually used in the portable telephone 1. The present example provides different contents for data 3 in response to characters of words respectively. When a headword reads 'duck', data 3 designate utterance of duck's cry. When a headword reads a musical instrument, data 3 designate reproduction of a tone color of a musical instrument. Data 3 do not necessarily designate utterance or generation of sound, hence, it is possible to designate picture that is reproduced in connection with headword.

FIG. 17 shows an example of a data format (or a contents format) for use in a dictionary database. That is, each one page of an electronic dictionary is composed of a set of various sequence data, namely, graphic sequence data, text sequence data, FM sequence data, and ADPCM sequence data. All pages do not necessarily describe all the sequence data described above. For example, a first page of an electronic dictionary is simply composed of text sequence data representing meaning of headword, and graphic sequence data designating buttons and background displayed on the screen of the display 63. In FIG. 17, each dictionary item is composed of plural pages. For example, dictionary item 1 is composed of pages 1-1, 1-2, 1-3, and 1-4.

The present example allows a jump from a certain linked document, which designates a dictionary database as a link destination, to a specific dictionary item of a dictionary database. Therefore, each dictionary item is accompanied with a link address in a dictionary database. In FIG. 17, dictionary item 1 is accompanied with link address 1, while dictionary item 2 is accompanied with link address 2.

The display sequencer 60 interprets graphic sequence data and text sequence data as display sequence data, whereas the sound generation sequencer 61 interprets FM sequence data and ADPCM sequence data as sound generation sequence data.

Next, the overall operation of the portable telephone 1 of the present example will be described in detail. Similar to the aforementioned first embodiment, the CPU 50 of the portable telephone 1 executes an incoming call notification setup process (see steps 101 to 106 shown in FIG. 6). In addition, the CPU 50 also executes an incoming call process (see steps 200, 202-212 shown in FIG. 7).

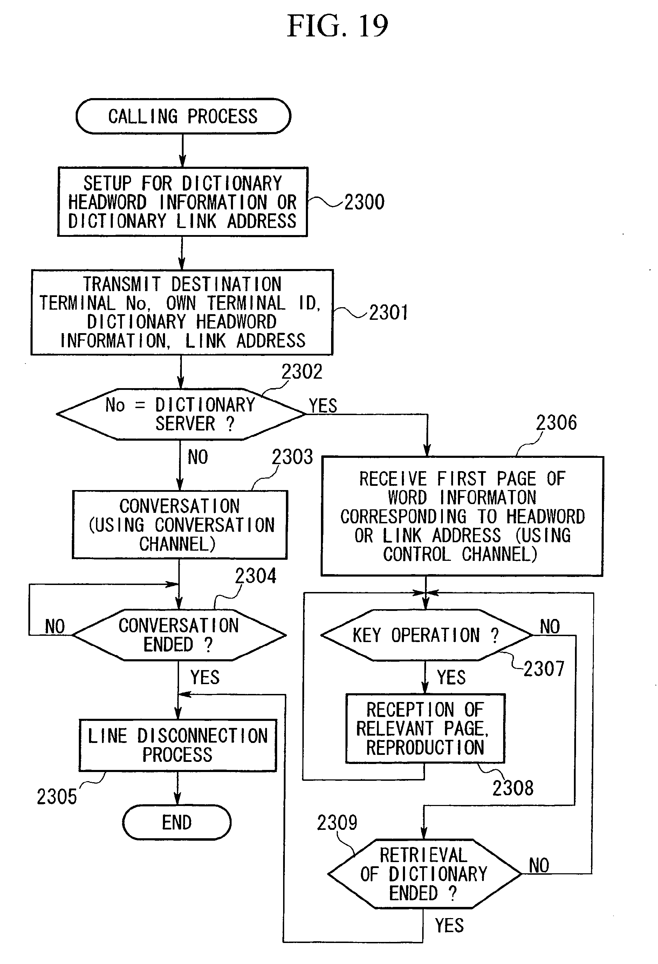

Next, the CPU 50 of the portable telephone 1 of the present example performs a calling process, which will be described with reference to a flowchart of FIG. 19. The calling process of FIG. 19 contains access to a dictionary database stored in the contents distribution server 44 (see FIG. 1), transmission of headword or link address, and reception of meaning of retrieved headword.

In a call mode, the user operates the input section 57 to make setups for transmission of headword and its link address in step 2300. Then, the user operates the portable telephone 1 to proceed to transmission of an identification number of a terminal device corresponding to a communication destination as well as ID data of the portable telephone 1, headword and its link address in step 2301. By operating the input section 57 of the portable telephone 1, the user is capable of designating a specific word accompanied with a link address in a linked document that designates a dictionary database as a link destination. When the user designates the aforementioned word, its link address is automatically transmitted to the terminal device of the communication destination.

In step 2302, a decision is made as to whether or not the identification number of the terminal device of the communication destination, which is transmitted in step 2301, matches the contents distribution server 44. In other words, a decision is made as to whether or not the terminal device of the communication destination matches the contents distribution server 44.

When the CPU 50 determines in step 2302 that the terminal device of the communication destination does not match the contents distribution server 44, the flow proceeds to step 2303 in which the portable telephone 1 performs conversation using a specific conversation channel. In step 2304, a decision is made as to whether or not the user ends conversation on the portable telephone 1. In other words, a decision is made as to whether or not the user operates an end key of the input section 57 of the portable telephone 1. When the CPU 50 determines in step 2304 that the user operates the end key to terminate conversation, the flow proceeds to step 2305 in which a line disconnection process is performed. Thereafter, the CPU 50 ends the calling process of FIG. 19.

When the CPU 50 determines in step 2302 that the terminal device of the communication destination matches the contents distribution server 44, the flow proceeds to step 2306 in which the portable telephone 1 receives word information, which is described on a first page of an electronic dictionary in connection with a headword and its link address, from the contents distribution server 44 over the specific control channel. Specifically, the portable telephone 1 receives display sequence data such as graphic sequence data and text sequence data as well as sound generation sequence data such as FM sequence data and ADPCM sequence data, which are shown in FIG. 17. The received data are stored in a prescribed storage area of the RAM 51 and are then subjected to reproduction.

The aforementioned word information is reproduced by user's operation of the input section 57. First, the display 63 displays word data representing meaning of a headword on the screen. In connection with word data displayed on the screen of the display 63, the sound generation sequencer 61 drives the ADPCM decoder 65 to reproduce vocalized sounds representing reading of the headword, so that the speaker 67 utters them. In addition, the user operates the input section 57 so that the FM sound source 64 or ADPCM decoder 65 reproduces sounds relevant to the headword, so that the speaker 67 utters them. Alternatively, the display 63 displays picture relevant to the headword on the screen.

When the FM sound source 64 or ADPCM decoder 65 reproduces sounds relevant to the headword, the sound generation sequencer 61 also drives the vibrator 68 based on data representing these sounds. For example, when the retrieved headword reads 'MOTORBIKE', the FM sound source 64 or ADPCM decoder 65 reproduces engine sound relevant to the headword. In this case, the sound generation sequencer 61 simultaneously drives the vibrator 68 based on data representing the engine sound relevant to the headword.

The aforementioned operation of the portable telephone 1 of the present example deepens user's understanding of a headword retrieved from an electronic dictionary. In addition, the portable telephone I having an electronic dictionary function attracts user's interests in referring to an electronic dictionary.

In step 2307, a decision is made as to whether or not the user prefers to receive data of a relevant page describing other pieces of word information in connection with the retrieved headword and its link address. When the user operates the input section 57 to accept data of a relevant page, the CPU 50 determines that the user instructs reception of other pieces of word information described on the relevant page. In this case, the portable telephone 1 receives word information of the relevant page from the contents distribution server 44. The received data are stored in a prescribed storage area of the RAM 51 and are then subjected to reproduction. After completion of step 2308, the flow returns to step 2307 so that the CPU 50 repeats the aforementioned steps.

When the CPU 50 determines in step 2307 that the user does not instruct reception of word information of a relevant page in connection with retrieved headword and its link address, the flow proceeds to step 2309 in which a decision is made as to whether or not retrieval of a dictionary database is to be ended. When a decision result of step 2309 is 'NO', the flow returns to step 2307 so that the CPU 50 repeats the aforementioned steps.

When a decision result of step 2309 is 'YES', the flow proceeds to step 2305 in which a line disconnection process is performed. Thereafter, the CPU 50 ends the calling process of FIG. 19.

The aforementioned third example is described under a precondition that a dictionary database is stored in a storage device of the contents distribution server 44. Of course, it is possible to download all the ontents of a dictionary database from the contents distribution server 44, so that downloaded contents are completely stored in the RAM 51 of the portable telephone 1. This eliminates the necessity of performing communication with the contents distribution server 44 storing the dictionary database.

As described heretofore, the present example has a variety of technical features and effects, which will be described below.
(1) A portable terminal device of the present example retrieves word information from an electronic dictionary (or dictionary database) by using headword as a retrieval key, so that a retrieval result is displayed while corresponding sound is generated. Word information designate word data presenting meaning of headword as well as utterance of reading of headword and utterance of sound relevant to headword. This provides the user with various types of presentation regarding word information that is retrieved from an electronic dictionary with regard to headword. That is, the portable terminal device displays word data on the screen; and it also utters reading of headword and its relevant sound. Thus, it is possible to deepen user's understanding with respect to words referred to an electronic dictionary. In addition, it is possible to attract user's interests in referring to an electronic dictionary of the portable terminal device.
(2) After word information is retrieved from an electronic dictionary with regard to headword that is used as a retrieval key, the portable terminal device of the present example displays word data on the screen in accordance with user's manual operation of an input section. Then, the user is capable of further operating the input section to enable utterance of reading of headword and its relevant sound. This promotes utility of an electronic dictionary in response to user's understanding of headword.
(3) The portable terminal device of the present example comprises a wireless communicator to download a dictionary database from a prescribed server by way of a base station. This eliminates the necessity of performing communication with a server in retrieval of a dictionary database. Hence, it is possible to reduce time required for retrieval of a dictionary database.
(4) A dictionary database is originally stored in a server connected with a public switched network. Hence, the user is capable of operating the portable terminal device to transmit headword to a server by means of a wireless communicator; then, a retrieval result is returned to the portable terminal device. That is, the user of the portable terminal device can consult a dictionary database online by the wireless communicator. This eliminates the necessity of providing a large storage area for storing a dictionary database in the portable terminal device. Thus, it is possible to reduce the overall storage capacity provided inside of the portable terminal device.
(5) The portable terminal device originally comprises a sound generator that generates a prescribed incoming call melody for notifying the user of reception of incoming calls. This sound generator can be also used for generating sounds in connection with headword referred to an electronic dictionary. Thus, it is possible to realize an electronic dictionary function of the portable terminal device with a simple configuration.
(6) The portable terminal device comprises a vibrator that is originally used for causing vibration to notify the user of reception of incoming calls. The vibrator can be also driven in response to utterance of sound relevant to headword referred to an electronic dictionary. This provides the user with live feelings in presentation of headword, which may further deepen user's understanding for headword retrieved from an electronic dictionary.
(7) In realization of an electronic dictionary function, the portable terminal device reproduces contents based on a prescribed format in which dictionary items are accompanied with link addresses, which allow a jump from a linked document, which designates a dictionary database as a link destination, to a desired dictionary item of a dictionary database. Therefore, so-called software contents creators are capable of creating easy-to-understand contents of electronic dictionaries by attaching links to words.

## Claims

1. A portable terminal device (1) comprising:
a display (63);
a sound system (61, 64-67);
a vibrator (68);
**characterized by**:
a storage (51, 52) for storing contents of a book consisting of one or plural pages each including display sequence data, in which display event data for instructing the display to display a prescribed picture or text and display duration data for designating a timing for starting displaying the prescribed picture or text are alternately arranged, and sound generation sequence data, in which sound generation event data for instructing a sound system to generate a prescribed speech or musical tones and sound generation duration data for designating a timing for starting generating the prescribed speech or musical tones are alternately arranged, to be subjected to synchronous reproduction;
a reproducer (50) for reading the contents of the book stored in the storage;
a page designator for designating a specific page of the book whose contents are to be reproduced in response to user's manual operation or in accordance with a prescribed reproduction program; and
a page reproduction controller (60, 61) for simultaneously reading the display sequence data and the sound generation sequence data included in the designated page of the book in response to the designation by the page designator, so that the display is controlled to display the prescribed picture or text an the screen in accordance with the display sequence data, and the sound system is controlled to produce the prescribed speech or musical tones in accordance with the sound generation sequence data, wherein the display sequence data and the sound generation sequence data are subjected to synchronous reproduction, and the vibrator is driven in accordance with the sound generation sequence data in synchronization with generation of the prescribed speech or musical tones.

2. A portable terminal device (1) according to claim 1 further comprising a wireless communicator (53) for performing wireless communication with other terminal device by way of a base station, wherein the reproduction instructor instructs reproduction of the book upon reception of an incoming call from the other terminal device by means of the wireless communicator.

3. A portable terminal device (1) according to claim 1 further comprising a wireless communicator (53) for performing wireless communication with other terminal device by way of a base station, wherein upon reception of an incoming call from the other terminal device by means of the wireless communicator, the display is controlled to display the prescribed picture or text on the screen, or the sound system is controlled to produce the prescribed speech or musical tones, or the vibrator is controlled to vibrate.

4. A portable terminal device according to claim 1 further comprising a wireless communicator (53) for performing wireless communication with other terminal device by way of a base station, wherein the storage stores the contents of the book that is downloaded from a server by means of the wireless communicator.

## Patentansprüche

1. Eine tragbare Terminaleinrichtung (1), welche folgendes aufweist:
eine Anzeige (63);
ein Klangsystem (61, 64-67),
einen Vibrator (68);
**dadurch gekennzeichnet dass**:
ein Speicher (51, 52) zum Speichern von Inhalten eines Buchs, welches aus einer oder mehreren Seiten besteht, welche jeweils folgendes umfassen:
Anzeigesequenzdaten, in welchen Anzeigeereignisdaten zum Anweisen der Anzeige zum Anzeigen eines vorbestimmten Bilds oder Texts und Anzeigedauerdaten zum Bestimmen eines Zeitpunkts zum Starten des Anzeigens des vorbestimmten Bilds oder Texts abwechselnd angeordnet sind, und
Klangerzeugungssequenzdaten, in welchen Klangerzeugungsereignisdaten zum Anweisen eines Klangsystems zum Erzeugen von vorbestimmter Sprache oder Musiktönen und Klangerzeugungsdauerdaten zum Bestimmen eines Zeitpunkts zum Starten der Erzeugung der vorbestimmten Sprache oder Musiktöne abwechselnd angeordnet sind,
wobei diese Daten synchroner Wiedergabe ausgesetzt werden sollen; einen Wiedergeber (50) zum Lesen der Inhalte des Buchs, welches in dem Speicher gespeichert ist;
einen Seitenbezeichner zum Bestimmen einer spezifischen Seite des Buchs, deren Inhalte wiedergegeben werden sollen, und zwar ansprechend auf einen manuellen Betrieb des Benutzers oder gemäß einem vorbestimmten Wiedergabeprogramm; und
eine Seitenwiedergabesteuervorrichtung (60, 61) zum gleichzeitigen Lesen der Anzeigesequenzdaten und der Klangerzeugungssequenzdaten, welche in der vorbestimmten Seite des Buchs beinhaltet sind, und zwar ansprechend auf die Bestimmung durch den Seitenbestimmer, so dass die Anzeige gesteuert wird zum Anzeigen des vorbestimmten Bilds oder Texts auf dem Bildschirm gemäß der Anzeigesequenzdaten, und das Klangsystem gesteuert wird zum Wiedergeben der vorbestimmten Sprache oder von musikalischen Tönen gemäß der Klangerzeugungssequenzdaten, wobei die Anzeigesequenzdaten und die Klangerzeugungssequenzdaten synchroner Wiedergabe ausgesetzt werden, und der Vibrator gemäß den Klangerzeugungssequenzdaten synchron mit der Erzeugung der vorbestimmten Sprache oder Musiktöne angetrieben wird.

2. Eine tragbare Terminaleinrichtung (1) gemäß Anspruch 1, welche ferner einen drahtlosen Kommunikator (53) zum Durchführen von drahtloser Kommunikation mit anderen Terminaleinrichtungen anhand einer Basisstation aufweist, wobei der Wiedergabeanweiser die Wiedergabe des Buchs beim Empfang eines hereinkommenden Anrufs von der anderen Terminaleinrichtung mittles des drahtlosen Kommunikators anweist.

3. Eine tragbare Terminaleinrichtung (1) gemäß Anspruch 1, welche ferner einen drahtlosen Kommunikator (53) zum Durchführen von drahtloser Kommunikation mit anderer Terminaleinrichtung anhand einer Basisstation aufweist, wobei beim Empfang eines hereinkommenden Anrufs von der anderen Terminaleinrichtung mittels des drahtlosen Kommunikators die Anzeige derart gesteuert wird, dass sie das vorbestimmte Bild oder den Text auf dem Bildschirm anzeigt, oder das Klangsystem gesteuert wird zum Wiedergeben der vorbestimmten Sprache oder Musiktöne, oder der Vibrator zum Vibrieren gesteuert wird.

4. Eine tragbare Terminaleinrichtung gemäß Anspruch 1, welche ferner einen drahtlosen Kommunikator (53) zum Durchführen von drahtloser Kommunikation mit einer anderen Terminaleinrichtung anhand einer Basisstation aufweist, wobei der Speicher die Inhalte des Buchs speichert, welche von dem Server mittels des drahtlosen Kommunikators heruntergeladen wurden.

## Revendications

1. Dispositif terminal mobile (1) comprenant :
un affichage (63) ;
un système sonore (61, 64-67) ;
un vibrateur (68) ;
**caractérisé par** :
une mémoire (51, 52) pour mémoriser le contenu d'un livre consistant en une ou plusieurs pages dont chacune inclut des données de séquence d'affichage, dans lesquelles des données d'événement d'affichage pour donner instruction à l'affichage d'afficher une image ou un texte prescrit et des données de durée d'affichage pour désigner une durée pour commencer l'affichage de l'image ou du texte prescrit sont disposées de façon alternée, et des données de séquence de génération sonore, dans lesquelles des données d'événement de génération sonore pour donner instruction à un système sonore de produire de la parole ou des sons musicaux prescrits et des données de durée de génération sonore pour désigner une durée de début de génération de la parole ou des sons musicaux prescrits sont disposées de façon alternée, pour être soumises à une reproduction synchrone ;
un dispositif de reproduction (50) pour lire le contenu du livre mémorisé dans la mémoire ;
un désignateur de page pour désigner une page particulière du livre dont le contenu doit être reproduit en réponse à une opération manuelle de l'utilisateur ou en accord avec un programme de reproduction prescrit ; et
un contrôleur de reproduction de page (60, 61) pour lire simultanément les données de séquence d'affichage et les données de séquence de génération sonore incluses dans la page désignée du livre en réponse à la désignation par le désignateur de page, de sorte que l'affichage est commandé pour afficher l'image ou le texte prescrit sur l'écran en accord avec les données de séquence d'affichage, et le système sonore est commandé pour produire la parole ou les sons musicaux prescrits en accord avec les données de séquence de génération sonore, dans lequel les données de séquence d'affichage et les données de séquence de génération sonore sont soumises à une reproduction synchrone et le vibrateur est commandé en accord avec les données de séquence de génération sonore en synchronisme avec la génération de la parole ou des sons musicaux prescrits.

2. Dispositif terminal mobile (1) selon la revendication 1, comprenant en outre un dispositif de communication sans fil (53) pour réaliser une communication sans fil avec un autre dispositif terminal par l'intermédiaire d'une station de base, dans lequel le dispositif d'instruction de reproduction donne instruction pour la reproduction du livre à réception de l'appel incident en provenance de l'autre dispositif terminal au moyen du dispositif de communication sans fil.

3. Dispositif terminal mobile (1) selon la revendication 1, comprenant en outre un dispositif de communication sans fil (53) pour réaliser une communication sans fil avec un autre dispositif terminal par l'intermédiaire d'une station de base, dans lequel, à réception d'un appel incident en provenance de l'autre dispositif terminal par le dispositif de communication sans fil, l'affichage est commandé pour afficher l'image ou le texte prescrit sur l'écran, ou bien le système sonore est commandé pour produire la parole ou les sons musicaux prescrits, ou bien le vibrateur est commandé pour vibrer.

4. Dispositif terminal mobile (1) selon la revendication 1, comprenant en outre un dispositif de communication sans fil (53) pour réaliser une communication sans fil avec un autre dispositif terminal par l'intermédiaire d'une station de base, dans lequel la mémoire mémorise le contenu du livre qui est déchargé à partir d'un serveur par le dispositif de communication sans fil.
